(19) Europäisches Patentamt
European Patent Office
Office européen des brevets

(11) Veröffentlichungsnummer: **0 056 787**
**B1**

# (12) EUROPÄISCHE PATENTSCHRIFT

(45) Veröffentlichungstag der Patentschrift: **19.06.85**

(51) Int. Cl.[4]: **G 03 C 1/06**, G 03 C 5/30, G 03 C 1/10 // C07F9/02, C07F9/48

(21) Anmeldenummer: **82810012.3**

(22) Anmeldetag: **14.01.82**

(54) **Photographisches Aufzeichnungsmaterial und Verfahren zu seiner Herstellung.**

(30) Priorität: **20.01.81 CH 352/81**

(43) Veröffentlichungstag der Anmeldung: **28.07.82 Patentblatt 82/30**

(45) Bekanntmachung des Hinweises auf die Patenterteilung: **19.06.85 Patentblatt 85/25**

(84) Benannte Vertragsstaaten: **BE CH DE FR GB IT LI NL**

(56) Entgegenhaltungen: **EP-A-0 005 441**

(73) Patentinhaber: **CIBA-GEIGY AG, Postfach, CH-4002 Basel (CH)**

(72) Erfinder: **Fryberg, Mario, Dr., Dery-le-Mont, CH-1724 Praroman-le-Mouret (CH)**
Erfinder: **Leppard, David G., Dr., Kohlplatzweg 26, CH-4310 Rheinfelden (CH)**

**EP 0 056 787 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft photographisches Aufzeichnungsmaterial, das in mindestens einer Silberhalogenidemulsionsschicht oder in einer an die Silberhalogenidemulsionsschicht angrenzenden Kolloidschicht mindestens einen Entwicklungsbeschleuniger enthält.

Es ist bekannt, die Empfindlichkeit photographischer Silberhalogenidemulsionen durch Zusatz von Entwicklungsbeschleunigern oder chemischen Sensibilisatoren indirekt oder direkt zu erhöhen. Solche Verbindungen sind beispielsweise in der britischen Patentschrift 1 430 998 sowie in der deutschen Offenlegungsschrift 2 627 878 beschrieben. Jedoch haben diese Verbindungen vielfach nur eine sehr schwache empfindlichkeitssteigernde Wirkung. Sie neigen ferner zur Schleierbildung und besitzen oft sehr geringe chemische und thermische Stabilität.

Aufgabe der vorliegenden Erfindung ist somit die Bereitstellung von neuen photographischen Aufzeichnungsmaterialien unter Verwendung von Entwicklungsbeschleunigern, welche eine hohe empfindlichkeitssteigernde Wirkung besitzen, ohne dabei die genannten Nachteile zu zeigen.

Es wurden nun Derivate des Oxaphosphorins für die Verwendung in Schichten photographischer Materialien gefunden, die dem Aufzeichnungsmaterial die gewünschten Eigenschaften verleihen.

Gegenstand der vorliegenden Erfindung ist daher ein photographisches Aufzeichnungsmaterial, das in mindestens einer Silberhalogenidemulsionsschicht oder in einer an die Silberhalogenidemulsionsschicht angrenzenden Kolloidschicht mindestens einen Entwicklungsbeschleuniger enthält, dadurch gekennzeichnet, daß der Entwicklungsbeschleuniger der Formel

$$A—R \qquad (1)$$

entspricht, worin
A ein Dibenz-[c,e][1,2]-oxaphosphorinrest der Formel

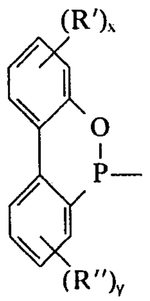

(2)

ist, worin
R' und R" unabhängig voneinander Wasserstoff, gegebenenfalls substituiertes Alkyl mit 1 bis 4 Kohlenstoffatomen oder Halogen,
x und y unabhängig voneinander 0, 1, 2 oder 3 sind und R gegebenenfalls substituiertes Amino, gegebenenfalls substituiertes cyclisches Amino, gegebenenfalls substituiertes Aryloxy oder eine Gruppe der Formel

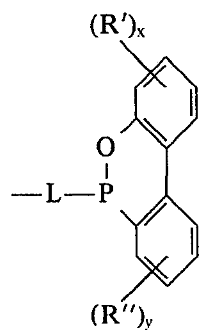

(3)

ist, worin
L ein Rest der Formel =N—Z, worin Z gegebenenfalls substituiertes Alkyl oder Cycloalkyl ist, ein gegebenenfalls substituierter 5- oder 6gliedriger, gesättigter oder ungesättigter, mindestens 2 Heteroatome enthaltender Ring, wobei die Bindungen dieses Ringes zu den Oxaphosphorinresten durch die Heteroatome erfolgen, gegebenenfalls substituiertes Arylenoxy, gegebenenfalls substituiertes Oxyarylenoxy oder ein Rest der Formel $-NB_1-E-NB_2-$ ist, worin $B_1$ und $B_2$ unabhängig voneinander Wasserstoff, Alkyl oder den Rest A sind, und E Alkylen oder

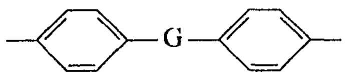

ist, worin G $-O$, $-S-$ oder Alkylen ist, und R', R'', x und y die oben angegebenen Bedeutungen haben.

Gegenstand der Erfindung ist ferner die Verwendung des photographischen Aufzeichnungsmaterials zur Herstellung photographischer Bilder.

Ein weiterer Gegenstand betrifft die mit dem photographischen Aufzeichnungsmaterial hergestellten photographischen Bilder.

Gegenstand der Erfindung ist auch ein Verfahren zur Herstellung des photographischen Aufzeichnungsmaterials.

Gegenstand der Erfindung ist ferner ein Entwicklungsbad, das Entwicklungsbeschleuniger der Formel (1) enthält und zur Entwicklung belichteter photographischer Materialien geeignet ist.

Der Substituent A in Verbindungen der Formel (1) ist ein Dibenz-[c,e][1,2]-oxaphosphorinrest, worin beide aromatischen Systeme unsubstituiert oder substituiert sein können. Als Substituenten kommen R' und R'' in Frage. Sie bedeuten unabhängig voneinander Wasserstoff oder gegebenenfalls substituiertes Alkyl mit 1 bis 4 Kohlenstoffatomen. Substituenten für diese Alkylreste sind beispielsweise Halogen, wie Chlor und Brom, ferner Methoxy, Äthoxy, Cyano oder Nitro. Chlor, Methoxy und Cyano sind bevorzugt. Besonders geeignete Alkylreste sind Methyl und Äthyl. Bedeuten R' und R'' unabhängig voneinander Halogen, so sind Chlor und Brom bevorzugt.

Die Indizes x und y sind unabhängig voneinander 0, 1, 2 oder 3, vorzugsweise 0 oder 1.

R bedeutet substituiertes Amino der Formel $-NR^1R^2$. Darin sind $R^1$ und $R^2$ unabhängig voneinander Wasserstoff oder Alkyl mit 1 bis 22 Kohlenstoffatomen, wobei die Alkylreste geradkettig oder verzweigt sein können, wie z. B. Methyl, Äthyl, Propyl, i-Propyl, Butyl, i-Butyl, tert.-Butyl, Amyl, tert.-Amyl (1,1-Dimethylpropyl), 1,1,3,3-Tetramethylbutyl, 1-Methyläthylpentyl, Hexyl, 1-Methylpentyl, Neopentyl, 1-, 2- oder 3-Methylhexyl, Heptyl, n-Octyl, tert.-Octyl, 2-Äthylhexyl, n-Nonyl, Isononyl, tert.-Nonyl, Decyl, tert.-Decyl, Undecyl; ferner Dodecyl, Tetradecyl, Hexadecyl, Octadecyl, Nonadecyl oder Eicosyl sowie die dazugehörenden Isomeren.

Alkylreste mit 1 bis 18, insbesondere 1 bis 12 Kohlenstoffatomen sind bevorzugt. Ganz besonders geeignet sind Alkylreste mit 1 bis 8 Kohlenstoffatomen. Die Alkylreste können mit Halogen, wie z. B. Fluor, Chlor oder Brom, Alkoxy mit 1 bis 4 Kohlenstoffatomen oder Phenyl substituiert sein.

$R^1$ und $R^2$ bedeuten ferner Alkenyl mit 2 bis 12 Kohlenstoffatomen. Sie leiten sich hinsichtlich ihrer chemischen Struktur von den oben genannten Alkylresten ab, wobei 1, 2 oder 3, vorzugsweise 1 Doppelbindung im Alkenylrest vorhanden ist. Als Substituenten der Alkenylreste können Halogen, z. B. Brom oder Chlor, oder Alkoxy, z. B. Methoxy oder Äthoxy, in Frage kommen.

Alkenylreste mit 2 bis 6, insbesondere 3 Kohlenstoffatomen sind bevorzugt.

$R^1$ und $R^2$ bedeuten ferner unabhängig voneinander Alkinyl mit 2 bis 18 Kohlenstoffatomen. Es können dabei die den genannten Alkylresten entsprechenden Alkinylreste in Frage kommen, wobei 1, 2 oder 3, vorzugsweise 1 Dreifachbindung im Alkinylrest vorhanden ist. Geeignete Substituenten für die Alkinylreste können Halogen, z. B. Fluor, Chlor oder Brom, ferner Cyano, Nitro oder Methoxy sein. Alkinylreste mit 2 bis 6, insbesondere 3 Kohlenstoffatomen sind bevorzugt.

$R^1$ und $R^2$ sind auch unabhängig voneinander gegebenenfalls substituiertes Cycloalkyl mit 6 bis 8, vorzugsweise 6 Kohlenstoffatomen. Bevorzugte Substituenten können Methyl und tert.-Butyl sein.

In der Bedeutung von gegebenenfalls substituiertem Aryl sind $R^1$ und $R^2$ unabhängig voneinander Phenyl oder Naphthyl. Diese Reste können mit Alkyl mit 1 bis 6 Kohlenstoffatomen wie z. B. Methyl, Äthyl, Propyl, i-Propyl, Butyl, i-Butyl, tert.-Butyl, Amyl, tert.-Amyl, Hexyl, 1,1,3,3-Tetramethylbutyl, 1-Methylphenyl oder Neopentyl substituiert sein. Die Arylsysteme können mit bis zu 3 solcher Alkylreste substituiert sein. Bevorzugtes Aryl ist Phenyl. Bevorzugte Arylsubstituenten sind Methyl, tert.-Butyl, tert.-Amyl und Hexyl.

Sind $R^1$ und $R^2$ unabhängig voneinander ein gegebenenfalls substituierter, gesättigter oder ungesättigter, mindestens ein Stickstoffatom enthaltender heterocyclischer Rest mit 4 bis 5 Kohlenstoffatomen, so sind gesättigte Systeme, vorzugsweise mit 5 Kohlenstoffatomen, besonders geeignet. Als Substituenten dieser Systeme können Alkylreste mit 1 bis 4 Kohlenstoffatomen in Frage kommen, wobei bis zu 6 solcher Alkylreste an einen heterocyclischen Ring gebunden sein können. Bevorzugte Alkylreste sind Methyl und tert.-Butyl.

R ist ferner gegebenenfalls substituiertes cyclisches Amino. Die Reste $R^1$ und $R^2$ in der Formel

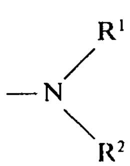

bilden dabei zusammen eine Alkylenkette mit 4 oder 5, vorzugsweise 5 Kohlenstoffatomen oder zweiwertige Reste der Formel

$—CH_2CH_2—O—CH_2CH_2—$ oder $—CH_2CH_2—NT—CH_2CH_2—$

worin T Wasserstoff oder Alkyl mit 1 bis 4 Kohlenstoffatomen, insbesondere Methyl ist.

Bedeutet R gegebenenfalls substituiertes Aryloxy wie z. B. Phenoxy oder Naphthoxy, so ist der Phenoxyrest bevorzugt. Dieser kann, wie auch der Naphthoxyrest, mit 1 bis 4 Substituenten substituiert sein und z. B. der Formel

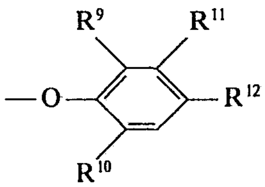

entsprechen.

Dabei bedeuten $R^9$ und $R^{10}$ unabhängig voneinander Wasserstoff oder Alkyl mit 1 bis 12 Kohlenstoffatomen. Beispiele für die Alkylreste sind in den Definitionen von $R^1$ und $R^2$ angegeben. Diese Reste können mit Phenyl weitersubstituiert sein, wobei der (die) Phenylrest(e) Methyl- oder tert.-Butylgruppen als weitere Substituenten besitzen kann (können). Bevorzugte Alkylreste sind Methyl, tert.-Butyl, tert.-Amyl und tert.-Octyl.

$R^{11}$ bedeutet Wasserstoff oder gegebenenfalls substituiertes Alkyl mit 1 bis 4 Kohlenstoffatomen. Bevorzugte Alkylgruppen sind Methyl, i-Propyl, Butyl und tert.-Butyl. Als Substituenten dieser Alkylreste können Methoxy, Cyano oder Nitro in Frage kommen.

$R^{12}$ ist Wasserstoff oder gegebenenfalls substituiertes Alkyl mit 1 bis 12 Kohlenstoffatomen. Als Beispiel können die entsprechenden obengenannten Alkylreste in Frage kommen. Diese können weiter substituiert sein mit Alkoxy mit 1 bis 18 Kohlenstoffatomen. Bevorzugte Alkoxyreste sind Octadecyloxy, Hexadecyloxy, tert.-Octyloxy, tert.-Nonyloxy, tert.-Pentyloxy, tert.-Butoxy, Äthoxy und Methoxy. Weitere Beispiele geeigneter Alkoxyreste lassen sich von der oben stehenden Aufzählung der Alkylreste in den Definitionen von $R^1$ und $R^2$ ableiten. Ferner können die Alkylreste mit Alkoxycarbonyl mit 2 bis 24, insbesondere 2 bis 18 Kohlenstoffatomen substituiert sein.

Bedeutet $R^{12}$ gegebenenfalls substituiertes Alkoxy mit 1 bis 18 Kohlenstoffatomen, so sind Alkoxyreste mit bis zu 12 Kohlenstoffatomen bevorzugt. Als Beispiele können die oben genannten Alkoxyreste in Frage kommen. Ferner sind Alkoxyreste mit 1 bis 4 Kohlenstoffatomen wie z. B. Methoxy, Äthoxy, Propoxy, Butoxy oder tert.-Butoxy, besonders geeignet. Die Alkoxyreste können mit Alkoxycarbonyl mit 2 bis 4 Kohlenstoffatomen weiter substituiert sein.

Ferner bedeutet $R^{12}$ Alkoxycarbonyl mit 2 bis 24, insbesondere 2 bis 19 Kohlenstoffatomen. Die entsprechenden Alkoxyreste mit 1 bis 18 Kohlenstoffatomen lassen sich von der obenstehenden Aufzählung der Alkylreste in den Definitionen von $R^1$ und $R^2$ ableiten. Die Alkoxyreste können mit Methoxy, Halogen wie z. B. Chlor oder Brom, sowie mit Cyano oder Nitro weiter substituiert sein.

Desweiteren bedeutet $R^{12}$ Thioalkyl mit 1 bis 18 Kohlenstoffatomen. Diese Thioalkylreste leiten sich bezüglich ihrer chemischen Struktur von den oben genannten Alkoxyresten ab. Bei besonders geeigneten Thioalkylverbindungen ist der Alkylrest eine Methyl-, Äthyl-, Butyl-, tert.-Butyl-, Pentyl- oder Hexylgruppe. Der Alkylrest ist gegebenenfalls mit Methoxy, Äthoxy, Halogen wie z. B. Chlor oder Brom, oder Alkoxycarbonyl mit 2 bis 4 Kohlenstoffatomen substituiert.

$R^{12}$ ist ferner eine Gruppe der Formel $-CO-NR^{13}R^{14}$, worin $R^{13}$ und $R^{14}$ unabhängig voneinander Wasserstoff oder gegebenenfalls substituiertes Alkyl mit 1 bis 4 Kohlenstoffatomen wie z. B. Methyl, Äthyl, Propyl, Butyl und tert.-Butyl sind. Diese können mit Alkoxy wie z. B. Methoxy oder Äthoxy sowie mit Alkoxycarbonyl mit 2 bis 4 Kohlenstoffatomen weiter substituiert sein.

$R^{13}$ und $R^{14}$ bedeuten auch unabhängig voneinander Alkenyl mit 3 bis 6, insbesondere 3 Kohlenstoffatomen.

Ferner können $R^{11}$ und $R^{12}$ zusammen mit den Kohlenstoffatomen, an die sie gebunden sind, einen gegebenenfalls substituierten, gesättigten oder ungesättigten, 5- oder 6gliedrigen Ring bilden.

Gesättigte, 5gliedrige Ringsysteme sind bevorzugt, welche mit Methyl, i-Propyl oder tert.-Butyl weiter substituiert sind.

R ist ferner eine Gruppe der Formel

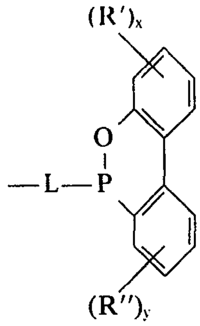

worin R', R", x und y die oben angegebenen Bedeutungen haben. L ist ein zweiwertiger Rest und bedeutet einen gegebenenfalls substituierten 5- oder 6gliedrigen, mindestens 2 Heteroatome enthaltenden Ring, wobei die Bindungen dieses Ringes zu den Oxaphosphorinresten durch die Heteroatome erfolgen, gegebenenfalls substituiertes Arylenoxy, gegebenenfalls substituiertes Oxyarylenoxy oder ein Rest der Formel $=N-Z$.

Ist L eine Gruppierung $=N-Z$, so bedeutet Z Alkyl mit 1 bis 22, insbesondere 1 bis 16 Kohlenstoffatomen. Alkylreste mit 8 bis 12 Kohlenstoffatomen sind ganz besonders geeignet. Beispiele für die Reste lassen sich von der in den Definitionen für $R^1$ und $R^2$ genannten Aufzählung ableiten. Als Substituenten dieser Reste können Alkoxy mit 1 bis 4 Kohlenstoffatomen, Alkoxycarbonyl mit 2 bis 4 Kohlenstoffatomen oder Cyano in Frage kommen. Z bedeutet ferner gegebenenfalls substituiertes Cycloalkyl, das 5 oder 6, vorzugsweise 6 Kohlenstoffatome enthält. Es ist gegebenenfalls mit Alkyl oder Alkoxy mit je 1 bis 4 Kohlenstoffatomen weiter substituiert.

L ist desweiteren ein gegebenenfalls substituierter 5- oder 6gliedriger, gesättigter oder ungesättigter, mindestens 2 Heteroatome enthaltender Ring, wobei die Bindungen dieses Rings zu den Oxaphosphorinresten durch die Heteroatome erfolgen. Gesättigte 5- oder 6gliedrige Ringe, die 2 Stickstoffatome enthalten sind bevorzugt, wie z. B.:

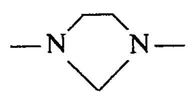
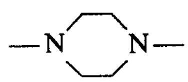
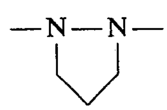
oder
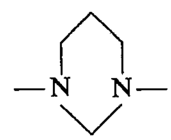

wobei die ersteren beiden besonders geeignet sind.

Alle Ringe können mit Methyl, Äthyl, Propyl, Butyl oder tert.-Butyl substituiert sein.

L bedeutet ferner gegebenenfalls substituiertes Arylenoxy. Bevorzugte Arylenoxyreste sind Phenylenoxy oder Naphthylenoxy, wobei Phenylenoxy ganz besonders geeignet ist. Dieses kann, wie auch der Naphthylenoxyrest, mit 1 bis 4 weiteren Substituenten substituiert sein, und z. B. der Formel

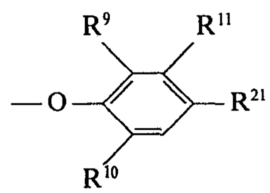

entsprechen. $R^9$, $R^{10}$ und $R^{11}$ haben die oben angegebenen Bedeutungen. $R^{21}$ ist jedoch ein Rest der Formel

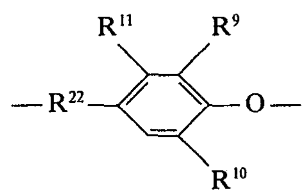
oder
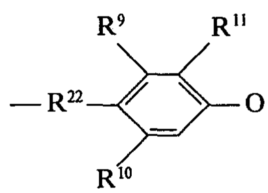

worin $R^{22}$ $-O-$, $-S-$ oder eine Gruppe der Formel $=CR^{51}R^{61}$ ist. Darin sind $R^{51}$ und $R^{61}$ unabhängig voneinander Wasserstoff oder Alkyl mit 1 bis 6, insbesondere 1 bis 4 Kohlenstoffatomen. Gruppierungen der Formel $=CH_2$, $=CHCH_3$ und $=C(CH_3)_2$ sind besonders bevorzugt.

$R^9$, $R^{10}$ und $R^{11}$ haben die oben angegebenen Bedeutungen. L kann also die folgenden Brückenglieder darstellen:

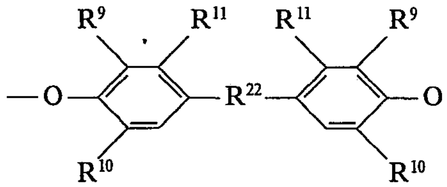

und

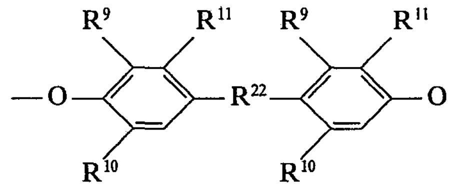

Bedeutet L gegebenenfalls substituiertes Oxyarylenoxy, so sind Oxyphenylenoxy und Oxynaphthylenoxy die bevorzugten Reste. Besonders geeignet sind Oxyphenylenoxyreste, welche, wie auch die Oxynaphthylenoxyreste, 1 oder 2 weitere Substituenten besitzen können und z. B. der Formel

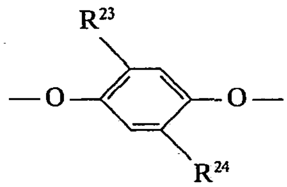

entsprechen. $R^{23}$ und $R^{24}$ sind darin unabhängig voneinander Wasserstoff oder gegebenenfalls substituiertes Alkyl mit 1 bis 18, insbesondere 1 bis 12 Kohlenstoffatomen. Beispiele für die Alkylreste lassen sich von der in den Definitionen von $R^1$ und $R^2$ genannten Aufzählung von Alkylresten ableiten. Als Substituenten dieser Reste können Methoxy, Halogen wie z. B. Chlor oder Brom, sowie Cyano oder Nitro in Frage kommen. Alkylreste mit 4 bis 8 Kohlenstoffatomen sind ganz besonders geeignet.

$R^{23}$ und $R^{24}$ bedeuten auch gegebenenfalls substituiertes Alkoxy mit 1 bis 4 Kohlenstoffatomen, wie z. B. Methoxy, Propoxy oder Butoxy, Methoxy ist bevorzugt.

Der Oxyphenylenoxyrest bedeutet also Brückenglieder der Formel

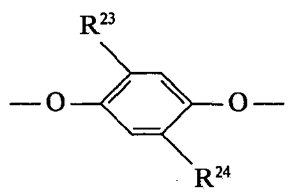

und

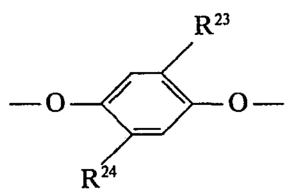

Ferner ist L ein Rest der Formel $-NB_1-E-NB_2$. E ist eine Alkylengruppe mit 1 bis 8, insbesondere 1 bis 6 Kohlenstoffatomen. E bedeutet eine Gruppe der Formel

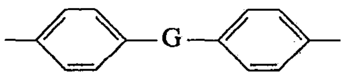

worin G $-O-$, $-S-$ oder eine Alkylengruppe der Formel $=CK_1K_2$ ist, worin $K_1$ und $K_2$ unabhängig voneinander Wasserstoff oder Alkyl mit je 1 bis 8, insbesondere 1 bis 4 Kohlenstoffatomen sind. Besonders bevorzugt sind $=CH_2$, $=CHCH_3$ und $=C(CH_3)_2$. $B_1$ und $B_2$ sind unabhängig voneinander Wasserstoff oder Alkyl mit 1 bis 4 Kohlenstoffatomen. Methyl und Äthyl werden bevorzugt. Desweiteren bedeuten $B_1$ und $B_2$ unabhängig voneinander de Rest A, wobei A die oben angegebenen Bedeutungen hat.

Bevorzugt ist nun ein solches photographisches Aufzeichnungsmaterial, worin der Entwicklungsbeschleuniger der Formel

$$A-R_1 \quad (4)$$

entspricht, worin

$R_1$ gegebenenfalls mit Alkyl, Alkenyl, Alkinyl, Cycloalkyl, Aryl oder mit einem heterocyclischen Rest substituiertes Amino, gegebenenfalls substituiertes 5- oder 6gliedriges cyclisches Amino, gegebenenfalls mit Alkyl, Alkoxy, Alkoxycarbonyl, Thioalkyl oder Carbamoyl substituiertes Phenoxy, oder einer Gruppe der Formel

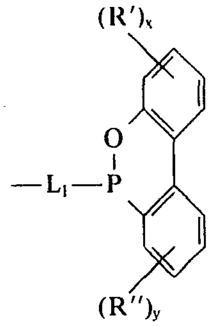

(5)

entspricht, worin
$L_1$ ein Rest der Formel $=N-Z$ ist, worin Z die oben angegebene Bedeutung hat, ein gegebenenfalls substituierter 5- oder 6gliedriger, gesättigter oder ungesättigter, mindestens 2 Heteroatome enthaltender Ring, wobei die Bindungen dieses Ringes zu den Oxaphosphorinresten durch die Heteroatome erfolgen, gegebenenfalls substituiertes Arylenoxy, gegebenenfalls substituiertes Oxyarylenoxy oder ein Rest der Formel $-NB_3-E_1-NB_4-$ ist, worin $B_3$ und $B_4$ unabhängig voneinander Wasserstoff, Alkyl mit 1 bis 4 Kohlenstoffatomen oder der Rest A sind, und $E_1$ Alkylen mit 1 bis 12 Kohlenstoffatomen oder

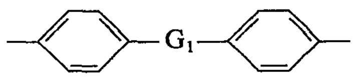

ist, worin $G_1$ $-O-$, $-S-$ oder $=CK_1K_2$ ist, worin $K_1$ und $K_2$ unabhängig voneinander Wasserstoff oder Alkyl mit je 1 bis 8 Kohlenstoffatomen sind, und worin A und R', R'', x und y die oben angegebenen Bedeutungen haben.

Geeignetes photographisches Aufzeichnungsmaterial enthält einen Entwicklungsbeschleuniger der Formel

$$A-R_2 \qquad (6)$$

worin
$R_2$ gegebenenfalls mit Alkyl, Alkenyl, Alkinyl, Cycloalkyl, Aryl oder mit einem heterocyclischen Rest substituiertes Amino, gegebenenfalls mit Alkyl, Alkoxy, Alkoxycarbonyl, Thioalkyl oder Carbamoyl substituiertes Phenoxy, oder eine Gruppe der Formel

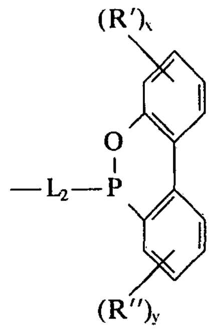

(7)

ist, worin
$L_2$ ein Rest der Formel $=N-Z_1$, worin $Z_1$ gegebenenfalls substituiertes Alkyl mit 1 bis 22 Kohlenstoffatomen oder gegebenenfalls substituiertes Cycloalkyl mit 5 oder 6 Kohlenstoffatomen ist, ein gegebenenfalls substituierter 5- oder 6gliedriger, gesättigter oder ungesättigter, mindestens 2 Heteroatome enthaltender Ring, wobei die Bindungen dieses Ringes zu den Oxaphosphorinresten durch die Heteroatome erfolgen, gegebenenfalls substituiertes Arylenoxy, gegebenenfalls substituiertes Oxyarylenoxy oder ein Rest der Formel $-NB_3-E_2-NB_4-$ ist, worin $E_2$ Alkylen mit 1 bis 8 Kohlenstoffatomen oder

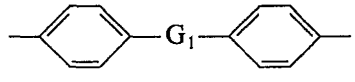

ist, und worin A, R', R'', x, y, $B_3$, $B_4$ und $G_1$ die oben angegebenen Bedeutungen haben.

Bevorzugt ist ferner ein photographisches Aufzeichnungsmaterial, welches einen Entwicklungsbeschleuniger der Formel

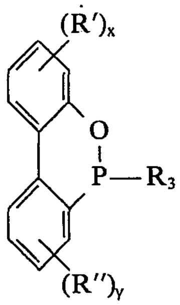 (8)

enthält, worin
$R_3$ der Formel

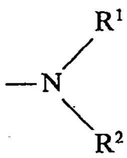 (9)

entspricht, worin
$R^1$ und $R^2$ unabhängig voneinander Wasserstoff, gegebenenfalls substituiertes Alkyl mit 1 bis 22 Kohlenstoffatomen, gegebenenfalls substituiertes Alkenyl mit 2 bis 18 Kohlenstoffatomen, gegebenenfalls substituiertes Alkinyl mit 2 bis 18 Kohlenstoffatomen, gegebenenfalls substituiertes Cycloalkyl mit 6 bis 8 Kohlenstoffatomen, gegebenenfalls substituiertes Aryl oder ein gegebenenfalls substituierter, gesättigter oder ungesättigter, mindestens ein Stickstoffatom enthaltender heterocyclischer Rest mit 4 oder 5 Kohlenstoffatomen sind, oder worin $R^1$ und $R^2$ zusammen einen zweiwertigen Rest zur Bildung eines 5- oder 6gliedrigen, gegebenenfalls ein weiteres Heteroatom enthaltenden, gegebenenfalls substituierten, gesättigten Ringes sind, und R', R'', x und y die oben angegebenen Bedeutungen haben.

Von Interesse ist photographisches Aufzeichnungsmaterial, worin der Entwicklungsbeschleuniger der Formel

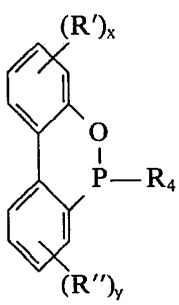 (10)

entspricht, worin
$R_4$ der Formel

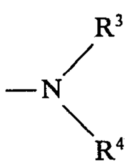 (11)

entspricht, worin
$R^3$ und $R^4$ unabhängig voneinander Wasserstoff, gegebenenfalls substituiertes Alkyl mit 1 bis 18 Kohlenstoffatomen, gegebenenfalls substituiertes Alkenyl mit 2 bis 12 Kohlenstoffatomen, gegebenenfalls substituiertes Cycloalkyl mit 6 bis 8 Kohlenstoffatomen, gegebenenfalls substituiertes Phenyl oder ein gegebenenfalls substituierter, gesättigter oder ungesättigter, mindestens ein Stickstoffatom enthaltender heterocyclischer Rest mit 4 oder 5 Kohlenstoffatomen sind, oder worin $R^3$ und $R^4$ zusammen einen zweiwertigen Rest zur Bildung eines 5- oder 6gliedrigen, gegebenenfalls substituierten, gesättigten Ringes sind, und R', R'', x und y die oben angegebenen Bedeutungen haben.

Besonders bevorzugtes photographisches Aufzeichnungsmaterial enthält einen Entwicklungsbeschleuniger der Formel

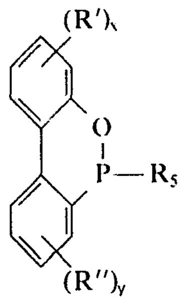

(12)

worin
$R_5$ der Formel

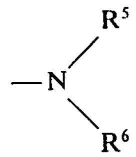

(13)

entspricht, worin
$R^5$ und $R^6$ unabhängig voneinander Wasserstoff, Alkyl mit 1 bis 18 Kohlenstoffatomen, Alkenyl mit 2 bis 12 Kohlenstoffatomen, Cycloalkyl mit 6 bis 8 Kohlenstoffatomen, gegebenenfalls mit Alkyl mit 1 bis 6 Kohlenstoffatomen substituiertes Phenyl, wobei der Phenylrest 1, 2 oder 3 solcher Alkylsubstituenten tragen kann, oder ein gegebenenfalls mit Alkyl mit 1 bis 4 Kohlenstoffatomen substituierter, gesättigter, mindestens ein Stickstoffatom enthaltender heterocyclischer Rest mit 4 oder 5 Kohlenstoffatomen sind, wobei der heterocyclische Rest 1 bis 6 solcher Alkylsubstituenten tragen kann, oder worin $R^5$ und $R^6$ zusammen einen Rest der Formel

$-(CH_2)_4-$ $-(CH_2)_5-$ $-CH_2CH_2-O-CH_2CH_2-$ oder
$-CH_2CH_2-NT-CH_2CH_2-$

bilden, worin T Wasserstoff oder Alkyl mit 1 bis 4 Kohlenstoffatomen ist, und R', R'', x und y die oben angegebenen Bedeutungen haben.

Ferner ist photographisches Aufzeichnungsmaterial von Bedeutung, das einen Entwicklungsbeschleuniger der Formel

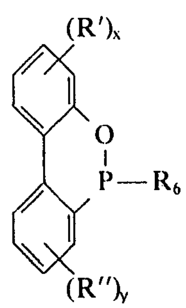

(14)

enthält, worin $R_6$ der Formel

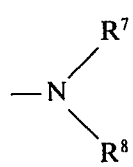

(15)

entspricht, worin
$R^7$ und $R^8$ unabhängig voneinander Wasserstoff, Alkyl mit 1 bis 12 Kohlenstoffatomen, Alkenyl mit 2 bis 6 Kohlenstoffatomen, Cyclohexyl, Cyclooctyl, gegebenenfalls mit Alkyl mit 1 bis 6 Kohlenstoffatomen substituiertes Phenyl, wobei der Phenylrest 1, 2 oder 3 solcher Substituenten tragen kann, oder gegebenenfalls mit Alkyl mit 1 bis 4 Kohlenstoffatomen substituiertes Pyrrolidinyl oder Piperidinyl sind, wobei die heterocyclischen Reste 1 bis 6 solcher Alkylsubstituenten tragen können, oder worin $R^7$ und $R^8$ zusammen einen Rest der Formel

$-(CH_2)_4-$ $-(CH_2)_5-$ $-CH_2CH_2-O-CH_2CH_2-$ oder

$-CH_2CH_2-NH-CH_2CH_2-$

bilden, und R', R'', x und y die oben angegebenen Bedeutungen haben.

Besonders geeignetes photographisches Aufzeichnungsmaterial enthält einen Entwicklungsbeschleuniger der Formel

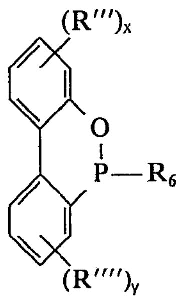

(16)

worin

R''' und R'''' unabhängig voneinander Wasserstoff, Methyl, Äthyl, Chlor oder Brom,

x' und y' unabhängig voneinander 0 oder 1 sind, und

$R_6$ die oben angegebene Bedeutung hat.

Desweiteren ist ein photographisches Aufzeichnungsmaterial von Interesse, das einen Entwicklungsbeschleuniger der Formel

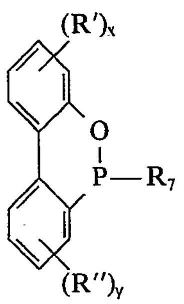

(17)

enthält, worin

$R_7$ gegebenenfalls substituiertes Phenoxy ist und R', R'', x und y die oben angegebenen Bedeutungen hat.

Wertvolles photographisches Aufzeichnungsmaterial enthält einen Entwicklungsbeschleuniger der Formel

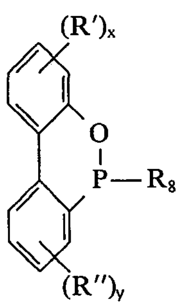

(18)

worin $R_8$ der Formel

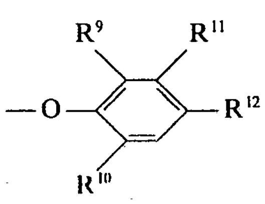

(19)

entspricht, worin

$R^9$ und $R^{10}$ unabhängig voneinander Wasserstoff oder gegebenenfalls substituiertes Alkyl mit 1 bis 12 Kohlenstoffatomen sind,
$R^{11}$ Wasserstoff oder gegebenenfalls substituiertes Alkyl mit 1 bis 4 Kohlenstoffatomen,
$R^{12}$ Wasserstoff, gegebenenfalls substituiertes Alkyl mit 1 bis 12 Kohlenstoffatomen, gegebenenfalls substituiertes Alkoxy mit 1 bis 18 Kohlenstoffatomen, Alkoxycarbonyl mit 2 bis 24 Kohlenstoffatomen, wobei der Alkoxyteil weiter substituiert sein kann oder gegebenenfalls substituiertes Thioalkyl mit 1 bis 18 Kohlenstoffatomen ist oder der Formel

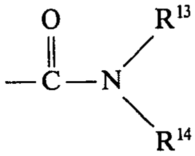
(20)

entspricht, worin
$R^{13}$ und $R^{14}$ unabhängig voneinander Wasserstoff, gegebenenfalls substituiertes Alkyl mit 1 bis 4 Kohlenstoffatomen oder Alkenyl mit 3 bis 6 Kohlenstoffatomen sind, oder
$R^{12}$ und $R^{11}$ zusammen diejenigen Atome sind, um zusammen mit den Kohlenstoffatomen, an die sie gebunden sind, einen gegebenenfalls substituierten, gesättigten oder ungesättigten, 5- oder 6gliedrigen Ring zu bilden und R', R'', x und y die oben angegebenen Bedeutungen haben.

Sehr geeignetes photographisches Aufzeichnungsmaterial enthält einen Entwicklungsbeschleuniger der Formel

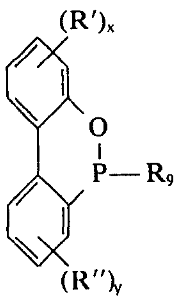
(21)

worin $R_9$ der Formel

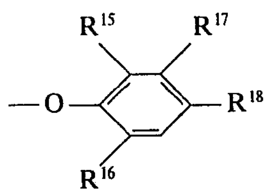
(22)

entspricht, worin
$R^{15}$ und $R^{16}$ unabhängig voneinander Wasserstoff oder gegebenenfalls mit substituiertem Phenyl substituiertes Alkyl mit 1 bis 12 Kohlenstoffatomen sind,
$R^{17}$ Wasserstoff oder Alkyl mit 1 bis 4 Kohlenstoffatomen,
$R^{18}$ Wasserstoff, gegebenenfalls mit Alkoxy mit 1 bis 18 Kohlenstoffatomen oder mit Alkoxycarbonyl mit 2 bis 24 Kohlenstoffatomen substituiertes Alkyl mit 1 bis 12 Kohlenstoffatomen, Alkoxy mit 1 bis 12 Kohlenstoffatomen, Alkoxycarbonyl mit 2 bis 24 Kohlenstoffatomen, oder Thioalkyl mit 1 bis 18 Kohlenstoffatomen ist oder der Formel

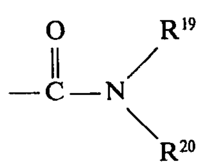
(23)

entspricht, worin
$R^{19}$ und $R^{20}$ unabhängig voneinander Wasserstoff oder Alkyl mit 1 bis 4 Kohlenstoffatomen sind, oder worin
$R^{18}$ und $R^{17}$ zusammen diejenigen Atome sind, um zusammen mit den Kohlenstoffatomen, an die sie gebunden sind, einen gegebenenfalls mit Alkyl mit 1 bis 4 Kohlenstoffatomen substituierten, gesättigten, 5- oder 6gliedrigen Ring zu bilden, wobei dieser mit bis zu 4 solcher Alkylsubstituenten substituiert sein kann, und R', R'', x und y die oben angegebenen Bedeutungen haben.

Von besonderem Interesse ist photographisches Aufzeichnungsmaterial, das einen Entwicklungsbeschleuniger der Formel

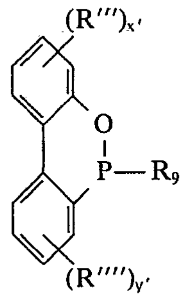

(24)

enthält, worin $R_9$, R''', R'''', x' und y' die oben angegebenen Bedeutungen haben.

Ferner ist photographisches Material von Bedeutung, welches einen Entwicklungsbeschleuniger der Formel

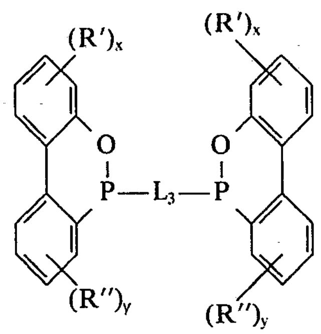

(25)

enthält, worin

$L_3$ ein Rest der Formel $=N-Z_2$, worin $Z_2$ gegebenenfalls substituiertes Alkyl mit 1 bis 16 Kohlenstoffatomen oder gegebenenfalls substituiertes Cyclohexyl ist, ein gegebenenfalls substituierter 5- oder 6gliedriger, gesättigter, mindestens 2 Heteroatome enthaltender Ring, wobei die Bindungen dieses Ringes zu den Oxaphosphorinresten durch die Heteroatome erfolgen, gegebenenfalls substituiertes Phenylenoxy oder Naphthylenoxy oder gegebenenfalls substituiertes Oxyphenylenoxy oder Oxynaphthylenoxy ist, und R', R'', x und y die oben angegebenen Bedeutungen haben.

Wertvolles photographisches Aufzeichnungsmaterial enthält einen Entwicklungsbeschleuniger der Formel

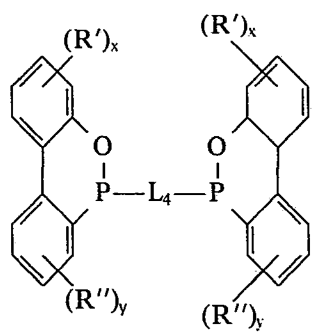

(26)

worin

$L_4$ ein Rest der Formel $=N-Z_3$, worin $Z_3$ Alkyl mit 1 bis 16 Kohlenstoffatomen oder Cyclohexyl ist, ein 5- oder 6gliedriger, gesättigter, mindestens 2 Stickstoffatome enthaltender Ring, wobei die Bindungen dieses Ringes zu den Oxaphosphorinresten durch die Stickstoffatome erfolgen, oder $L_4$ ein Rest der Formel

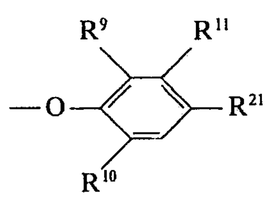

(27)

ist, worin
$R^{21}$ einem Rest der Formeln

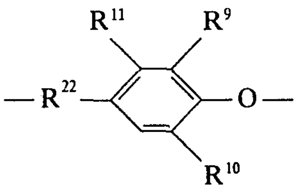

(28)

oder

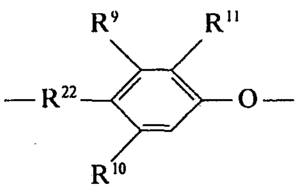

(29)

entspricht, worin $R^{22}$ $-O-$, $-S-$ oder $=CR^{51}R^{61}$ ist, worin $R^{51}$ und $R^{61}$ unabhängig voneinander Wasserstoff oder Alkyl mit 1 bis 6 Kohlenstoffatomen sind, und $R^9$, $R^{10}$ und $R^{11}$ die oben angegebenen Bedeutungen haben, oder $L_4$ der Formel

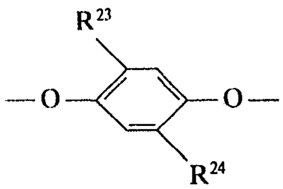

(30)

entspricht, worin $R^{23}$ und $R^{24}$ unabhängig voneinander Wasserstoff, gegebenenfalls substituiertes Alkyl mit 1 bis 18 Kohlenstoffatomen oder gegebenenfalls substituiertes Alkoxy mit 1 bis 4 Kohlenstoffatomen sind, und R', R'', x und y die oben angegebenen Bedeutungen haben.

Ein außerordentlich geeignetes photographisches Aufzeichnungsmaterial enthält einen Entwicklungsbeschleuniger der Formel

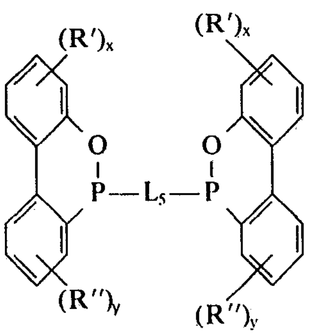

(31)

worin $L_5$ ein Rest der Formel $=N-Z_3$ ist, worin $Z_3$ die oben angegebene Bedeutung hat, oder einem Rest der Formeln

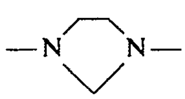

(32)

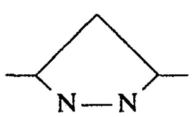

(33)

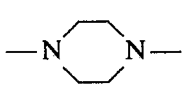

(34)

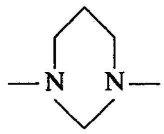 (35)

entspricht,
oder $L_5$ der Formel

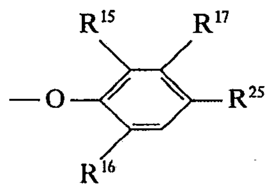 (36)

entspricht, worin
$R^{25}$ einem Rest der Formeln

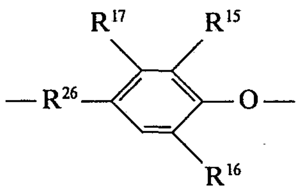 (37)

oder

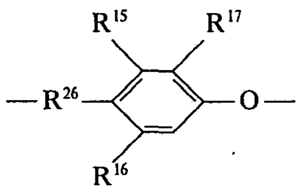 (38)

entspricht, worin
$R^{26}$ $=CR^{51}R^{61}$ ist, worin $R^{51}$ und $R^{61}$ die oben angegebenen Bedeutungen haben und $R^{15}$, $R^{16}$ und $R^{17}$ die angegebenen Bedeutungen haben, oder $L_5$ ein Rest der Formel

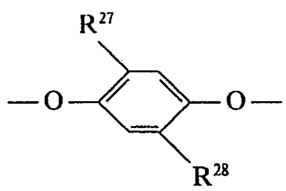 (39)

ist, worin
$R^{27}$ und $R^{28}$ unabhängig voneinander Wasserstoff, Alkyl mit 1 bis 12 Kohlenstoffatomen oder Alkoxy mit 1 bis 4 Kohlenstoffatomen sind, und
R', R", x und y die oben angegebenen Bedeutungen haben.

Von besonderem Interesse ist ein photographisches Aufzeichnungsmaterial, das einen Entwicklungsbeschleuniger der Formel

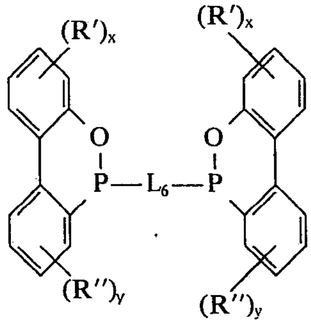 (40)

enthält, worin

$L_6$ ein Rest der Formel $=N-Z_3$, worin $Z_3$ die oben angegebenen Bedeutungen hat, oder ein Rest der Formeln

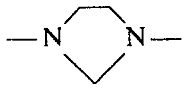

(33)

oder

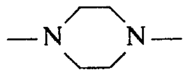

(34)

ist, oder $L_6$ der Formel

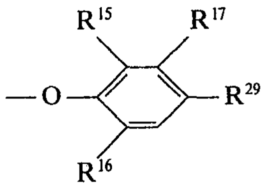

(41)

entspricht, worin $R^{29}$ einem Rest der Formeln

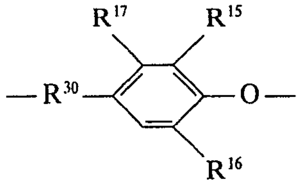

(42)

oder

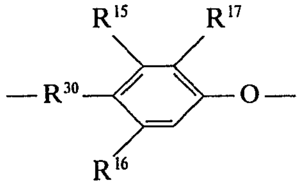

(43)

entspricht, worin

$R^{30} = CR^{51}R^{61}$ ist und

$R^{15}$, $R^{16}$ und $R^{17}$ sowie $R^{51}$ und $R^{61}$ die oben angegebenen Bedeutungen haben, oder

$L_6$ der Formel

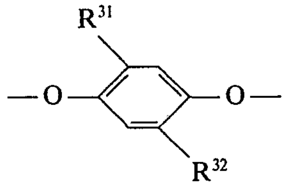

(44)

entspricht, worin

$R^{31}$ und $R^{32}$ unabhängig voneinander Wasserstoff oder Alkyl mit 1 bis 12 Kohlenstoffatomen sind, und R', R'', x und y die oben angegebenen Bedeutungen haben.

Von großer Bedeutung ist ein photographisches Aufzeichnungsmaterial, das einen Entwicklungsbeschleuniger der Formel

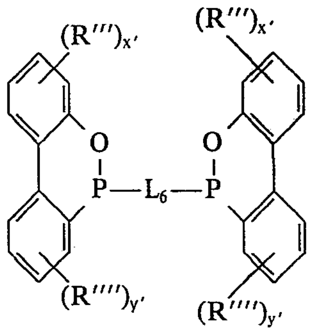

(45)

enthält, worin $L_6$, R''', R'''', x' und y' die oben angegebenen Bedeutungen haben.

Besonders geeignetes photographisches Aufzeichnungsmaterial enthält einen Entwicklungsbeschleuniger der Formel

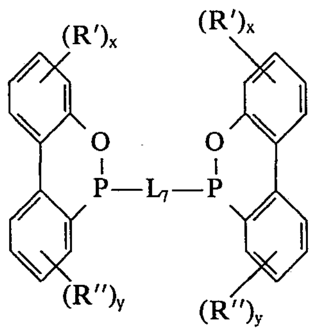

(46)

worin $L_7$ ein Rest der Formel $-NB_5-E_3-NB_6-$ ist, worin $B_5$ und $B_6$ unabhängig voneinander Wasserstoff, Methyl, Äthyl oder den Rest A sind, und worin $E_3$ Alkylen mit 1 bis 6 Kohlenstoffatomen oder

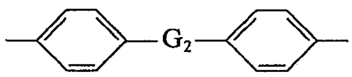

ist, worin $G_2$ $-O-$, $-S-$ oder $=CK_3K_4$ ist, worin $K_3$ und $K_4$ unabhängig voneinander Wasserstoff oder Alkyl mit 1 bis 4 Kohlenstoffatomen sind, und R', R'', x und y die oben angegebenen Bedeutungen haben.

Bevorzugtes photographisches Aufzeichnungsmaterial enthält einen Entwicklungsbeschleuniger der Formel

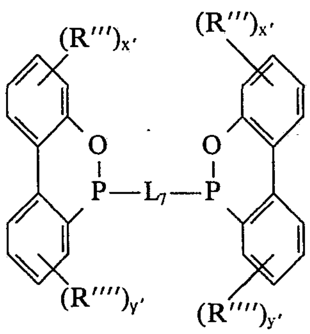

(47)

worin R''', R'''', x', y' und $L_7$ die oben angegebenen Bedeutungen haben.

Besonders geeignetes photographisches Aufzeichnungsmaterial enthält einen Entwicklungsbeschleuniger der Formel

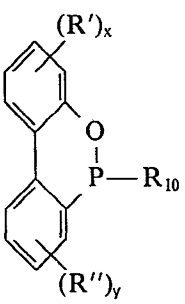

(48)

worin $R_{10}$ der Formel

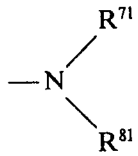

(49)

entspricht, worin
$R^{71}$ Wasserstoff, Alkyl mit 1 bis 12 Kohlenstoffatomen, Cyclohexyl oder Cyclooctyl, und
$R^{81}$ Alkyl mit 1 bis 12 Kohlenstoffatomen, Cyclohexyl, Cyclooctyl, Alkenyl mit 2 bis 6 Kohlenstoffatomen, gegebenenfalls mit Alkyl mit 1 bis 6 Kohlenstoffatomen substituiertes Phenyl, wobei dieses 1 oder 2 solcher Alkylsubstituenten tragen kann, oder gegebenenfalls mit Alkyl mit 1 bis 4 Kohlenstoffatomen substituiertes Piperidinyl ist, wobei dieses 1 bis 4 solcher Alkylsubstituenten tragen kann, oder worin $R^{81}$ und $R^{71}$ zusammen einen Rest der Formeln

$-(CH_2)_4-$ $-(CH_2)_5-$ $-CH_2CH_2-O-CH_2CH_2-$ oder
$-CH_2CH_2-NH-CH_2CH_2-$

bilden,
oder worin $R_{10}$ der Formel

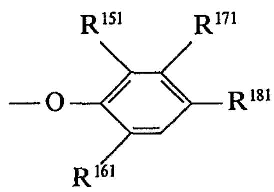

(50)

entspricht, worin
$R^{151}$ und $R^{161}$ unabhängig voneinander Wasserstoff, Alkyl mit 1 bis 8 Kohlenstoffatomen, Benzyl oder Phenyläther sind, wobei die Phenylreste mit Alkyl mit 1 bis 4 Kohlenstoffatomen substituiert sein können,
$R^{171}$ Wasserstoff, Methyl oder Äthyl und
$R^{181}$ Wasserstoff, gegebenenfalls mit Alkoxycarbonyl mit 2 bis 24 Kohlenstoffatomen substituiertes Alkyl mit 1 bis 8 Kohlenstoffatomen, Alkoxy mit 1 bis 8 Kohlenstoffatomen oder Alkoxycarbonyl mit 2 bis 9 Kohlenstoffatomen ist, oder $R^{181}$ zusammen mit $R^{171}$ diejenigen Atome bedeutet, um zusammen mit den Kohlenstoffatomen, an die sie gebunden sind, einen gegebenenfalls mit Alkyl mit 1 bis 4 Kohlenstoffatomen substituierten, gesättigten, 5gliedrigen Ring zu bilden, wobei dieser mit bis zu 4 solcher Alkylsubstituenten substituiert sein kann,
oder worin $R_{10}$ der Formel

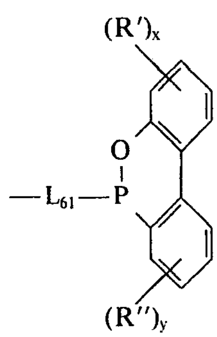

(51)

entspricht, worin
$L_{61}$ ein Rest der Formel $=N-Z_4$, worin $Z_4$ Alkyl mit 1 bis 12 Kohlenstoffatomen oder Cyclohexyl ist, ein Rest der Formeln

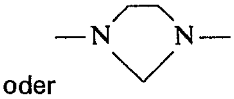

(33)

oder

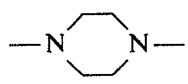

(34)

oder

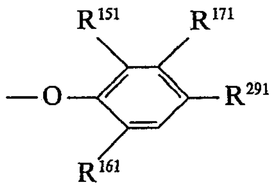

(52)

ist, worin

$R^{291}$ einem Rest der Formeln

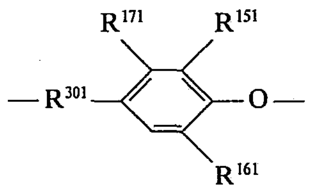

(53)

oder

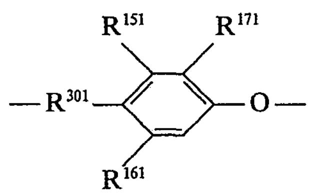

(54)

entspricht, worin

$R^{301}=CR^{52}R^{62}$ ist, worin $R^{52}$ und $R^{62}$ unabhängig voneinander Wasserstoff oder Alkyl mit 1 bis 4 Kohlenstoffatomen sind,

oder worin $L_{61}$ der Formel

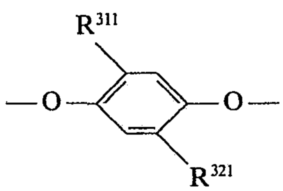

(55)

entspricht, worin

$R^{311}$ und $R^{321}$ unabhängig voneinander Wasserstoff oder Alkyl mit 1 bis 8 Kohlenstoffatomen sind,

oder worin $R_{10}$ der Formel

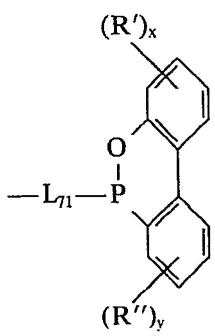

(56)

entspricht, worin

$L_{71}$ ein Rest der Formel $-NB_7-E_4-NB_8-$ ist, worin $B_7$ und $B_8$ unabhängig voneinander Wasserstoff oder den Rest A bedeuten, und $E_4$ Alkylen mit 1 bis 6 Kohlenstoffatomen oder ein Rest der Formel

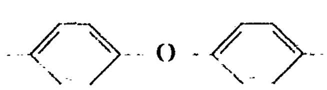

ist, und worin R', R'', x und y die oben angegebenen Bedeutungen haben.

Wertvoll ist auch ein photographisches Aufzeichnungsmaterial, das einen Entwicklungsbeschleuniger der Formel

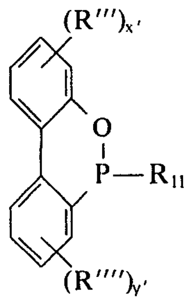

(57)

enthält, worin
$R_{11}$ der Formel

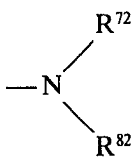

(58)

entspricht, worin
$R^{72}$ Wasserstoff, Alkyl mit 1 bis 8 Kohlenstoffatomen oder Cyclohexyl und
$R^{82}$ Alkyl mit 1 bis 8 Kohlenstoffatomen, Cyclohexyl, Allyl, gegebenenfalls mit Alkyl mit 1 bis 4 Kohlenstoffatomen substituiertes Phenyl, wobei dieses 1 oder 2 solcher Alkylsubstituenten tragen kann, oder gegebenenfalls mit Methyl substituiertes Piperidin-4-yl ist, wobei dieses 1 bis 4 Methylgruppen tragen kann, oder worin $R^{82}$ und $R^{72}$ zusammen einen Rest der Formeln

$-(CH_2)_5-$ oder $-CH_2CH_2-NH-CH_2CH_2-$

bilden, oder worin
$R_{11}$ der Formel

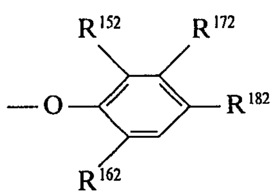

(59)

entspricht, worin
$R^{152}$ und $R^{162}$ unabhängig voneinander Wasserstoff, Alkyl mit 1 bis 8 Kohlenstoffatomen oder Benzyl sind, wobei der Phenylrest mit Methylgruppen substituiert sein kann,
$R^{172}$ Wasserstoff oder Methyl und
$R^{182}$ Wasserstoff, Alkyl mit 1 bis 8 Kohlenstoffatomen, mit Alkoxycarbonyl mit 2 bis 19 Kohlenstoffatomen substituiertes Alkyl mit 1 bis 4 Kohlenstoffatomen, Methoxy oder Alkoxycarbonyl mit 2 bis 19 Kohlenstoffatomen ist, oder $R^{182}$ zusammen mit $R^{172}$ diejenigen Atome bedeutet, um zusammen mit den Kohlenstoffatomen, an die sie gebunden sind, einen gegebenenfalls mit 1 bis 4 Methylgruppen substituierten, gesättigten, 5gliedrigen Ring zu bilden, oder worin
$R_{11}$ der Formel

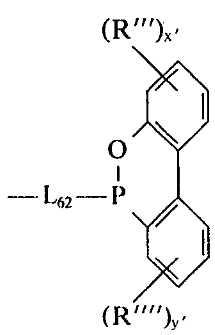

(60)

entspricht, worin
$L_{62}$ ein Rest der Formel $=N-Z_4$ ist, worin $Z_4$ die oben angegebenen Bedeutungen hat, oder der Formel

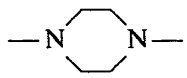 (34)

oder

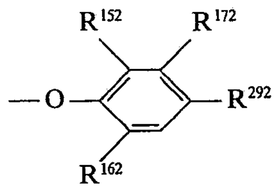 (61)

entspricht, worin
$R^{292}$ einem Rest der Formeln

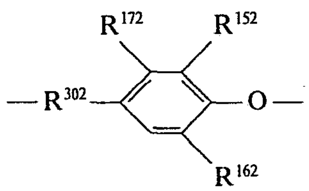 (62)

oder

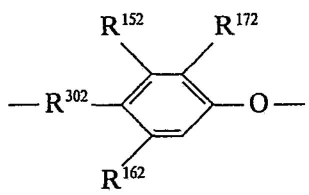 (63)

entspricht, worin
$R^{302}$ $-CH_2-$, $-CHCH_3-$ oder $-C(CH_3)_2-$ ist,
oder worin $L_{62}$ der Formel

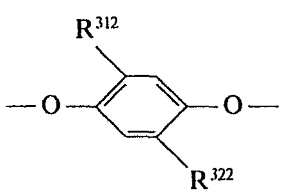 (64)

entspricht, worin
$R^{312}$ und $R^{322}$ unabhängig voneinander Wasserstoff oder Alkyl mit 1 bis 4 Kohlenstoffatomen sind, oder worin $R_{11}$ der Formel

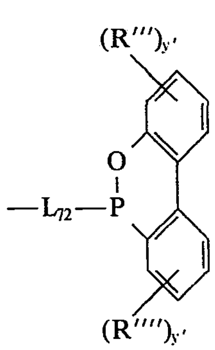 (65)

entspricht, worin
$L_{72}$ ein Rest der Formel $-NB_7-E_5-NB_8-$ ist, worin $B_7$ und $B_8$ die oben angegebenen Bedeutungen haben, und $E_5$ Alkylen mit 1 bis 6 Kohlenstoffatomen ist, und worin R''', R'''', x' und y' die oben angegebenen Bedeutungen haben.

Die Verbindungen der Formel (1) sind aus EP-A 352, EP-A 5 441 und US 4 185 006 bekannt.

Die erfindungsgemäß verwendeten Entwicklungsbeschleuniger werden in Kontakt mit der Silberhalogenidemulsionsschicht verwendet. Das heißt, sie müssen während der Entwicklung in der Emulsionsschicht anwesend sein. Dies kann entweder dadurch erreicht werden, daß man die Verbindungen in die Emulsionsschicht vor der Belichtung einarbeitet oder in dem man ihnen die Möglichkeit gibt, aus einem Entwickler in die Emulsionsschicht einzudiffundieren. Dies ist möglich, da die Entwicklungsbeschleuniger gegen Hydrolyse stabil sind und deshalb über längere Zeit gelöst in einem Verarbeitungsbad vorliegen können. Das Einbringen der Verbindungen direkt in die Silberhalogenidemulsion ist bevorzugt. Man kann entweder wäßrige Lösungen dieser Verbindungen verwenden oder Lösungen in einem organischen Lösungsmittel, das die photographischen Eigenschaften des lichtempfindlichen Materials nicht beeinflußt.

Die erfindungsgemäß verwendeten empfindlichkeitssteigernden Verbindungen können der Emulsion zu verschiedenen Zeitpunkten der Emulsionsherstellung zugefügt werden. Man kann sie beispielsweise einzeln oder gemischt mit anderen üblichen Zusätzen während der physikalischen oder chemischen Reifung oder zu irgend einem anderen Zeitpunkt vor dem Vergießen der Emulsion zugeben. Am zweckmäßigsten geschieht dies jedoch nach der chemischen Reifung und kurz vor dem Vergießen der Emulsion.

Die zugesetzte Menge richtet sich nach der gewählten Verbindung sowie nach der Art des für die Silberhalogenidemulsion verwendeten kolloidalen Bindemittels. Im allgemeinen werden die Verbindungen gemäß vorliegende Erfindung in einer Menge von 1 bis 50 pro Mol Silberhalogenid verwendet.

Zur Einarbeitung der Verbindungen in die Silberhalogenidemulsionen können die üblichen Methoden angewandt werden. Sie können z. B. aus Lösungen in kaum wassermischbaren, hochsiedenden Lösungsmitteln z. B. Di-n-butylphthalat und Tricresylphosphat, oder in kaum wassermischbaren, niederigsiedenden Lösungsmitteln, wie Äthylacetat, Methylenchlorid und Chloroform, usw., oder Mischungen davon, eingearbeitet werden. Zu diesem Zweck werden diese Lösungen in außerordentlich feinen Tröpfchen, vorzugsweise in Gegenwart eines Netz- oder Dispergiermittels, in dem hydrophilen, kolloidalen Medium dispergiert. Das sich kaum mit Wasser mischende, niederigsiedende Lösungsmittel wird dann abgedampft. Natürlich kann jede andere dem Fachmann bekannte Technik, Additive in Kolloidmischungen einzuarbeiten, angewendet werden. Es können z. B. die wasserlöslichen Substanzen, die eine wasserlöslichmachende Sulfogruppe (in Säure- oder Salzform) enthalten, der Gießzusammensetzung der in Frage kommenden Schicht aus einer wäßrigen oder alkalischen Lösung einverleibt werden.

Die hydrophile Kolloidzusammensetzung, in der die erfindungsgemäßen Verbindungen dispergiert oder gelöst werden, braucht nicht unbedingt die Gießzusammensetzung der Silberhalogenidemulsionsschicht selbst zu sein, in der sie enthalten sein sollten. Die Verbindungen können vorteilhafterweise erst in einer wäßrigen, lichtunempfindlichen, hydrophilen Kolloidlösung dispergiert oder gelöst werden, worauf die entstandene Mischung gegebenenfalls nach Entfernen der organischen Lösungsmittel mit der Gießzusammensetzung der lichtempfindlichen Silberhalogenidemulsionsschicht kurz vor dem Auftragen eingehend gemischt wird.

So können z. B. polymere oder copolymere Latices gegebenenfalls in Gegenwart eines organischen Lösungsmittels mit den erfindungsgemäßen Verbindungen beladen werden. Das so erhaltene Gemisch wird dann vor dem Auftrag der lichtempfindlichen Silberhalogenidemulsion zugemischt.

Aufgrund ihrer Eigenschaft, die Entwickelbarkeit photographischer Schichten zu unterstützen, eignen sich die erfindungsgemäß verwendeten Verbindungen vorzüglich zur Steigerung der Röntgenlichtempfindlichkeit sowie der allgemeinen Lichtempfindlichkeit, sowohl von orthochromatischen, panchromatischen und anderen speziellen Emulsionen, als auch von konventionellen spektral nicht sensibilisierten Emulsionen. Die Substanzen können diesen Emulsionen entweder getrennt oder gemeinsam mit den üblichen Sensibilisierungsfarbstoffen zugesetzt werden. Es sei noch erwähnt, daß die beschriebenen Vorteile der erfindungsgemäß angewandten Verbindungen sowohl Negativ- als auch Positivemulsionen betreffen.

Vorteilhaft sind die neuen Verbindungen für die Entwicklung lichtempfindlicher Materialien, die für die Wiedergabe graphischer Darstellungen bestimmt sind.

Im Silberfarbbleichverfahren, wo nach einer ersten Schwarzweißentwicklung mit Hilfe des entstandenen Silberbildes der eingelagerte Farbstoff bildmäßig proportional der Silbermenge ausgebleicht wird, haben sich die erfindungsgemäßen Verbindungen ganz besonders bewährt. In ihrer Gegenwart werden nach der Belichtung des Materials erheblich größere Mengen an Silber entwickelt, was sich dann in einer besseren und vollständigeren Bleichung des Farbstoffes auswirkt. Durch die besser Ausnützung des eingegossenen Silbers lassen sich auch nicht unerhebliche Mengen an Silber einsparen.

Als Entwickler kommen die dem Fachmann bekannten Entwicklersubstanzen in Frage. Die Verarbeitung entspricht den üblicherweise für das entsprechende photographische Material angewandten Methoden.

Die Herstellung der erfindungsgemäß verwendeten Entwicklungsbeschleuniger ist aus der genannten Literatur bekannt. Sie wird in den folgenden Beispielen näher erläutert.

Beispiel 1

35,1 g (0,15 Mol) 6-Chloro-dibenz[c,e][1,2]-oxaphosphorin, 27,1 g (0,15 Mol) Dicyclohexylamin und 50 ml Triäthylamin werden während 10 Stunden bei Rückflußtemperatur gehalten. Die Lösung wird mit Toluol versetzt, das Triäthylaminhydrochlorid durch Filtration entfernt, und das Filtrat am Vakuum eingeengt. Das kristalline Produkt besitzt einen Schmelzpunkt von 162°C (Verbindung 4 in Tabelle 1).

Beispiel 2

Verfährt man wie in Beispiel 1 beschrieben und verwendet man anstelle des Dicyclohexylamins 15,1 g (0,15 Mol) Diisopropylamin, so erhält man das 6-(N,N-Di-isopropylamino)-dibenz[c,e][1,2]-oxaphosphorin mit einem Schmelzpunkt von 111°C. (Verbindung 5 in Tabelle 1).

Beispiel 3

Unter Verwendung eines Mol-Äquivalents Cyclohexylamin und zwei Mol-Äquivalenten 6-Chloro-dibenz[c,e][1,2]-oxaphosphorin unter sonst gleichen Bedingungen wie in Beispiel 1 beschrieben, erhält man das N,N-Bis-(dibenz[c,e][1,2]-oxaphosphorin-6-yl)-N-cyclohexylamin mit einem Schmelzpunkt von 191°C (Verbindung 10 in Tabelle 1).

Entsprechend erhält man die in Tabelle 1 zusammengestellten Verbindungen.

Tabelle 1

| Nr. | Verbindung |
|---|---|
| 1 | 6-(N,N-Di-n-octylamino)-dibenz[c,e][1,2]-oxaphosphorin |
| 2 | 6-(N-2',6'-Di-t-butylphenylamino)-dibenz[c,e][1,2]-oxaphosphorin |
| 3 | 6-(N-Cyclohexyl-N-allyl-amino)-dibenz[c,e][1,2]-oxaphosphorin |
| 4 | 6-(N,N-Di-cyclohexylamino)-dibenz[c,e][1,2]-oxaphosphorin |
| 5 | 6-(N,N-Di-isopropylamino-dibenz[c,e][1,2]-oxaphosphorin |
| 6 | 1,4-Bis-(dibenz[c,e][1,2]-oxaphosphorin-6'-yl)piperazin |
| 7 | 6-[N-Dodecyl-N-4'-(2',2',6',6'-tetramethylpiperidinyl)-amino]-dibenz[c,e][1,2]-oxaphosphorin |
| 8 | N,N-Bis-(dibenz[c,e][1,2]-oxaphosphorin-6-yl)-N-n-decylamin |
| 9 | N,N,N',N'-Tetra-(dibenz[c,e][1,2]-oxaphosphorin-6-yl)-hexamethylendiamin |
| 10 | N,N-Bis-(dibenz[c,e][1,2]-oxaphosphorin-6-yl)-cyclohexylamin |
| 11 | N,N-Bis-(dibenz[c,e][1,2]-oxaphosphorin-6'-yl)-2-äthyl-n-hexylamin |
| 12 | 6-(2,6-Di-tert.-butyl-phenoxy)-dibenz[c,e][1,2]-oxaphosphorin |
| 13 | 6-(2,4-Di-tert.-octyl-phenoxy)-dibenz[c,e][1,2]-oxaphosphorin |
| 14 | 6-(2,4-Di-tert.-pentyl-phenoxy)-dibenz[c,e][1,2]-oxaphosphorin |
| 15 | 6-(2,6-Di-tert.-butyl-4-methoxy-phenoxy)-dibenz[c,e][1,2]-oxaphosphorin |
| 16 | 6-(1',1',3',3'-Tetramethyl-6'-tert.-butyl-5'-indanoxy)-dibenz[c,e][1,2]-oxaphosphorin |

Fortsetzung

| Nr. | Verbindung |
|---|---|
| 17 | 6-[2',6'-Di-tert.-butyl-4'-(2'-n-octadecyloxycarbonyl-äthyl)-phenoxy]-dibenz[c,e][1,2]-oxaphosphorin |
| 18 | 6-(2',4',6'-Tri-tert.-butyl-phenoxy)-dibenz[c,e][1,2]-oxaphosphorin |
| 19 | 6-(2',6'-Di-tert.-butyl-4'-n-octadecyloxycarbonyl-phenoxy)-dibenz[c,e][1,2]-oxaphosphorin |
| 20 | 6-(2,4-Di-4-dimethylbenzylphenoxy)-dibenz[c,e][1,2]-oxaphosphorin |
| 21 | 2',4'-Di-tert.-butyl-hydrochinon-(dibenz[c,e][1,2]-oxaphosphorin-6-yl)-äther |
| 22 | 6-(2,6-Dicyclopentyl-4-tert.-butyl)-dibenz[c,e][1,2]-oxaphosphorin |
| 23 | 6-(2,6-Diphenyl-4-dodecyloxy)-dibenz[c,e][1,2]-oxaphosphorin |

Beispiel 4

Die in der folgenden Tabelle 2 angegebenen Mengen an Entwicklungsbeschleuniger werden jeweils in einem Gemisch von 534 mg Trikresylphosphat und 20 ml Äthylacetat gelöst. Dazu gibt man 140 ml einer wäßrigen 6 %igen Gelatinelösung sowie 1 ml einer 0,88 %igen Lösung von Diisobutylnaphthalinsulfonsäure (Natriumsalz).

Das Gemisch wird 5 Minuten mit einem Ultraschallgerät emulgiert. Dazu gibt man eine Silberhalogenidemulsion mit einem Silbergehalt von insgesamt 0,6 g Silber sowie eine wäßrige Lösung des Härters der Formel

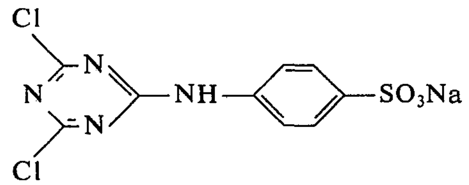

Das Gemisch wird auf polyäthylen beschichtetem Papier bei ~40°C vergossen und bei Raumtemperatur getrocknet.

Die so erhaltenen Proben des beschichteten Papiers werden unter einem 21-Stufenkeil ($\Delta = 0{,}15$) 2 Sekunden mit 200 Lux belichtet und anschließend bei 30°C wie folgt verarbeitet:

3 Minuten Entwicklung
1 Minute Wässern
3 Minuten Fixieren
4 Minuten Wässern, anschließend getrocknet.

Die angewandten Verarbeitungsbäder weisen die üblichen in der Photographie bekannten Zusammensetzungen auf.

Man erhält Schwarzweißabbildungen des Keils mit den in der Tabelle 2 beschriebenen Kenngrößen.

Tabelle 2

| Probe | Entwicklungs-beschleuniger No. | Eingegossene Mengen in g | Gemessene Graudichten bei Stufe x · 100 | | | | |
|---|---|---|---|---|---|---|---|
| | | | 1 | 4 | 8 | 12 | 16 |
| 1 | – | – | 70 | 54 | 21 | 1 | 0 |
| 2 | 4 | 0,129 | 80 | 65 | 34 | 6 | 1 |
| 3 | 13 | 0,176 | 85 | 73 | 41 | 8 | 1 |

Daraus geht eindeutig hervor, daß über den ganzen Belichtungsbereich in Gegenwart der Oxaphosphorine bei gleicher Entwicklung höhere Silberdichten erreciht werden.

Beispiel 5

Es werden Güsse entsprechend Beispiel 4 hergestellt, jedoch mit den in Tabelle 3 angegebenen Entwicklungsbeschleunigern. Die Proben werden unter einem 5-Stufenkeil mit 200 Lux zwei Sekunden belichtet und wie in Beispiel 4 verarbeitet. Auf den einzelnen Stufen wird das entwickelte, metallische Silber röntgenfluorimetrisch bestimmt. Die erhaltenen Resultate sind in Tabelle 3 zusammengestellt.

Tabelle 3

| Probe No. | Entwicklungs-beschleuniger | Eingegossene Menge in g | Gemessene Menge Silber in $mg \cdot m^{-2}$ auf Stufe | | | |
|---|---|---|---|---|---|---|
| | | | 1 | 2 | 3 | 4 |
| 1 | – | – | 140 | 266 | 328 | 338 |
| 2 | 8 | 0,189 | 310 | 406 | 446 | 449 |
| 3 | 17 | 0,190 | 235 | 327 | 346 | 388 |

Es wurden auf allen Stufen bei Zugabe der Oxaphosphorine unter gleichen Entwicklungsbedingungen höhere Silbermengen gemessen.

Beispiel 6

0,427 mMol des Entwicklungsbeschleunigers Nr. (13) und 0,32 mMol des Farbstoffes der Formel

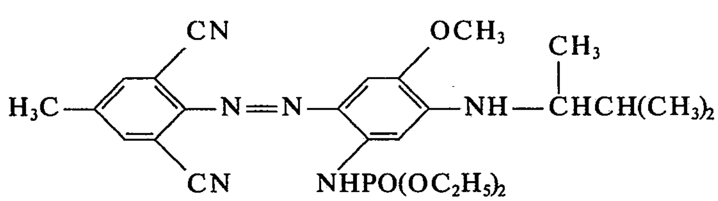

werden in einem Gemisch von 2,5 g Trikresylphosphat und 25 ml Äthylacetat gelöst. Man gibt 8,5 g Gelatine in Form einer 6 %igen wäßrigen Lösung sowie 1,0 ml einer 0,8 %igen Lösung eines Netzmittels der Formel

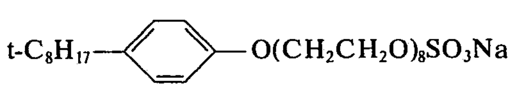

dazu und emulgiert 5 Minuten mit einem Ultraschallgerät. Zur frisch hergestellten Farbstoff und Entwicklungsbeschleuniger enthaltenden Emulsion gibt man eine Silberhalogenidemulsion mit einem Silbergehalt von 0,75 g sowie eine wäßrige Lösung des Härters der Formel

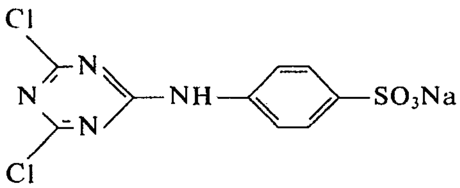

Das Gemisch wird auf einen pH-Wert von 6,5 eingestellt und bei 40°C auf polyäthylenbeschichtetes Papier vergossen. Nach Erstarren der Schicht wird bei Raumtemperatur getrocknet.

In gleicher Weise werden Proben begossen, die jedoch an Stelle des Additives der Nr. (13) äquimolare Mengen des Entwicklungsbeschleunigers der Nr. (10) enthalten. Zur Kontrolle wird eine Probe ohne Beschleunigerzusatz hergestellt.

Diese Proben werden unter einem 21-Stufenkeil mit 500 Lux 2 Sekunden belichtet und bei 30°C wie folgt verarbeitet:

| | |
|---|---|
| 1. Entwickeln | 3 Minuten |
| 2. Wässern | 1 Minute |
| 3. Farbbleichen | 3 Minuten |
| 4. Wässern | 1 Minute |
| 5. Fixieren | 3 Minuten |
| 6. Wässern | 4 Minuten |

Die Verarbeitungsbäder 1. und 5. haben die gleiche Zusammensetzung wie in Beispiel 1. Das Farbbleichbad 3. ist wie folgt zusammengesetzt:

| | |
|---|---|
| 1950 ml | Wasser |
| 56 ml | konz. $H_2SO_4$ |
| 2 ml | Mercaptobernsteinsäure |
| 18 g | NaI |
| 12 g | 4-Nitrophenol-2-sulphonsäure-Dinatriumsalz |
| 2 g | 6-Methoxy-2,3-dimethyl-chinoxalin |

Man erhält klare, scharfe Magentakeile mit einem Absorptionsmaximum bei 564 nm und den in Tabelle 4 angegebenen Dichten.

Tabelle 4

| Probe No. | Entwicklungs-beschleuniger | Menge in g | Farbstoffdichte gemessen auf Stufe × 100 | | | | | | | |
|---|---|---|---|---|---|---|---|---|---|---|
| | | | 1 | 2 | 4 | 6 | 8 | 10 | 12 | 20 |
| 1 | – | – | 18 | 21 | 29 | 80 | 173 | 217 | 230 | 231 |
| 2 | 10 | 0,170 | 12 | 12 | 12 | 12 | 25 | 106 | 178 | 210 |
| 3 | 13 | 0,176 | 13 | 13 | 13 | 15 | 64 | 152 | 205 | 220 |

Aus diesem Vergleich geht hervor, daß bei Zugabe von Entwicklungsbeschleuniger der eingegossene Farbstoff über den ganzen Belichtungsbereich infolge höherer Silbermengen in größerem Maße gebleicht wird.

Beispiel 7

Es werden Güsse entsprechend Beispiel 4 hergestellt, die jedoch noch als weitere Komponente den Farbstoff der Formel

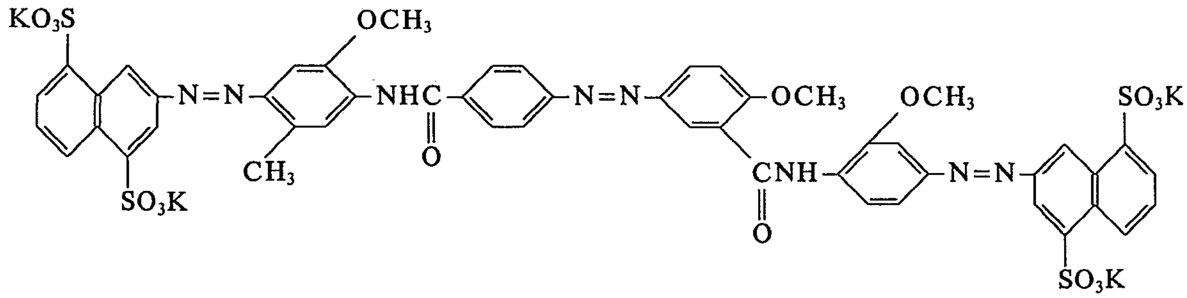

enthalten. Die erhaltenen Güsse werden belichtet und gemäß Beispiel 6 verarbeitet. Man erhält klare, scharfe Gelbkeile. Die gemessenen Dichten sind in Tabelle 5 zusammengestellt.

Tabelle 5

| Probe No. | Entwicklungs-beschleuniger | Eingesetzte Menge mg | Dichte gemessen auf Stufe × 100 | | | | | | |
|---|---|---|---|---|---|---|---|---|---|
| | | | 1 | 3 | 6 | 9 | 12 | 15 | 20 |
| 1 | – | – | 9 | 12 | 47 | 193 | 251 | 274 | 257 |
| 2 | 13 | 176 | 9 | 10 | 13 | 57 | 198 | 240 | 237 |
| 3 | 10 | 170 | 8 | 8 | 11 | 56 | 184 | 230 | 233 |
| 4 | 8 | 190 | 9 | 9 | 9 | 32 | 156 | 210 | 226 |

Die wesentlich vollständigere Farbbleichung (niedrigere Farbdichten) ist bei den die Entwicklungsbeschleuniger enthaltenden Proben deutlich erkennbar.

Beispiel 8

0,108 g Entwicklungsbeschleuniger der Nr. (10) werden in einem Gemisch aus 20 ml Äthylacetat und 534 mg Trikresylphosphat gelöst. Diese Lösung wird gemäß Beispiel 4 in einer wäßrigen Gelatinelösung in Gegenwart eines Netzmittels der Formel

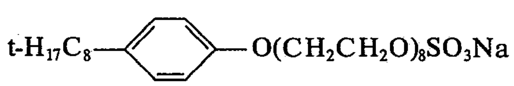

emulgiert. Die erhaltene Emulsion wird zusammen mit einer Silberbromidgelatineemulsion auf einen Triacetatträger vergossen. Das Gießgewicht beträgt 3 g/m$^2$ Gelatine, 4,5 g/m$^2$ Silber, 54 mg/m$^2$ Entwicklungsbeschleuniger (Probe A).

Zwei weitere Proben werden wie beschrieben hergestellt, wobei die eine jedoch keinen Entwicklungsbeschleuniger und kein Trikresylphosphat enthält (Probe B) und die andere keinen Entwicklungsbeschleuniger jedoch Trikresylphosphat enthält (Probe C).

Die Proben A, B und C werden gemäß Beispiel 4 belichtet und verarbeitet. Die Ausmessung der erhaltenen Keile ergibt folgende sensitometrische Daten:

Tabelle 6

| Probe | $S_{2,0}$ (log E)*) | Schleier |
|---|---|---|
| A | 2,50 | 0,05 |
| B | 2,31 | 0,05 |
| C | 2,34 | 0,05 |

*) gemessen als Dichte 2 + Schleier

Diese Ergebnisse zeigen, daß das den Entwicklungsbeschleuniger enthaltende Material ohne die Schleierbildung zu begünstigen eine um das 1,5fache höhere Empfindlichkeit besitzt als die entsprechenden Materialien ohne Beschleuniger.

Ähnliche Ergebnisse erhält man, wenn andere übliche Silberhalogenidemulsionen wie z. B. Silberchlorid, Silberchlorobromid- oder Silberbromojodidemulsionen eingesetzt werden.

**Patentansprüche**

1. Photographisches Aufzeichnungsmaterial, das in mindestens einer Silberhalogenidemulsionsschicht oder in einer an die Silberhalogenidemulsionsschicht angrenzenden Kolloidschicht mindestens einen Entwicklungsbeschleuniger enthält, dadurch gekennzeichnet, daß der Entwicklungsbeschleuniger der Formel

$$A - R \quad (1)$$

entspricht, worin
A ein Dibenz-[c,e][1,2]-oxaphosphorinrest der Formel

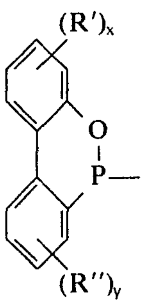

(2)

ist, worin
R' und R" unabhängig voneinander Wasserstoff, gegebenenfalls substituiertes Alkyl mit 1 bis 4 Kohlenstoffatomen oder Halogen,
x iund y unabhängig voneinander 0, 1, 2 oder 3 sind und
R gegebenenfalls substituiertes Amino, gegebenenfalls substituiertes cyclisches Amino, gegebenenfalls substituiertes Aryloxy oder eine Gruppe der Formel

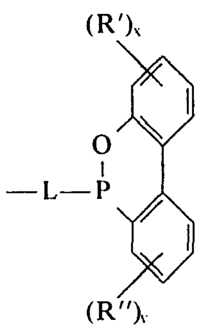

(3)

ist, worin
L ein Rest der Formel $=N-Z$, worin Z gegebenenfalls substituiertes Alkyl oder Cycloalkyl ist, ein gegebenenfalls substituierter 5- oder 6gliedriger, gesättigter oder ungesättigter, mindestens 2 Heteroatome enthaltender Ring, wobei die Bindungen dieses Ringes zu den Oxaphosphorinresten durch die Heteroatome erfolgen, gegebenenfalls substituiertes Arylenoxy, gegebenenfalls substituiertes Oxyarylenoxy oder ein Rest der Formel $-NB_1-E-NB_2-$ ist, worin $B_1$ und $B_2$ unabhängig voneinander Wasserstoff, Alkyl oder den Rest A sind, und E Alkylen oder

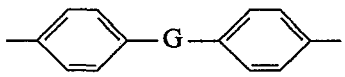

ist, worin G $-O$, $-S-$ oder Alkylen ist, und R′, R″, x und y die oben angegebenen Bedeutungen haben.

2. Photographisches Aufzeichnungsmaterial nach Anspruch 1, dadurch gekennzeichnet, daß der Entwicklungsbeschleuniger der Formel

$$A-R_1 \qquad (4)$$

entspricht, worin
$R_1$ gegebenenfalls mit Alkyl, Alkenyl, Alkinyl, Cycloalkyl, Aryl oder mit einem heterocyclischen Rest substituiertes Amino, gegebenenfalls substituiertes 5- oder 6gliedriges cyclisches Amino, gegebenenfalls mit Alkyl, Alkoxy, Alkoxycarbonyl, Thioalkyl oder Carbamoyl substituiertes Phenoxy, oder einer Gruppe der Formel

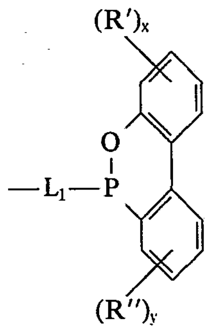
(5)

ist, worin
$L_1$ ein Rest der Formel $=N-Z$ ist, worin Z die in Anspruch 1 angegebene Bedeutung hat, ein gegebenenfalls substituierter 5- oder 6gliedriger, gesättigter oder ungesättigter, mindestens 2 Heteroatome enthaltender Ring, wobei die Bindungen dieses Ringes zu den Oxaphosphorinresten durch die Heteroatome erfolgen, gegebenenfalls substituiertes Arylenoxy, gegebenenfalls substituiertes Oxyarylenoxy oder ein Rest der Formel $-NB_3-E_1-NB_4-$ ist, worin $B_3$ und $B_4$ unabhängig voneinander Wasserstoff, Alkyl mit 1 bis 4 Kohlenstoffatomen oder den Rest A sind, und $E_1$ Alkylen mit 1 bis 12 Kohlenstoffatomen oder ein Rest der Formel

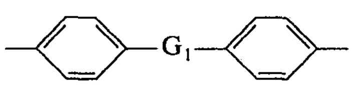

ist, worin $G_1$ $-O-$, $-S-$ oder $=CK_1K_2$ ist, worin $K_1$ und $K_2$ unabhängig voneinander Wasserstoff oder Alkyl mit je 1 bis 8 Kohlenstoffatomen sind, und worin
A und R′, R″, x und y die in Anspruch 1 angegebenen Bedeutungen haben.

3. Photographisches Aufzeichnungsmaterial nach Anspruch 2, dadurch gekennzeichnet, daß der Entwickkungsbeschleuniger der Formel

$$A-R_2 \qquad (6)$$

entspricht, worin
$R_2$ gegebenenfalls mit Alkyl, Alkenyl, Alkinyl, Cycloalkyl, Aryl oder mit einem heterocyclischen Rest substituiertes Amino, gegebenenfalls substituiertes 5- oder 6gliedriges cyclisches Amino, gegebenenfalls mit Alkyl, Alkoxy, Alkoxycarbonyl, Thioalkyl oder Carbamoyl substituiertes Phenoxy, oder eine Gruppe der Formel

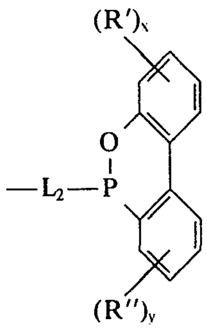

(7)

ist, worin

$L_2$ ein Rest der Formel $=N-Z_1$, worin $Z_1$ gegebenenfalls substituiertes Alkyl mit 1 bis 22 Kohlenstoffatomen oder gegebenenfalls substituiertes Cycloalkyl mit 5 oder 6 Kohlenstoffatomen ist, ein gegebenenfalls substituierter 5- oder 6gliedriger, gesättigter oder ungesättigter, mindestens 2 Heteroatome enthaltender Ring, wobei die Bindungen dieses Ringes zu den Oxaphosphorinresten durch die Heteroatome erfolgen, gegebenenfalls substituiertes Arylenoxy, gegebenenfalls substituiertes Oxyarylenoxy oder ein Rest der Formel $-NB_3-E_2-NB_4-$ ist, worin $E_2$ Alkylen mit 1 bis 8 Kohlenstoffatomen oder

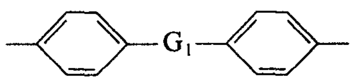

ist, und worin

A, R', R'', x, y, $B_3$, $B_4$ und $G_1$ die oben angegebenen Bedeutungen haben.

4. Photographisches Aufzeichnungsmaterial nach Anspruch 3, dadurch gekennzeichnet, daß der Entwicklungsbeschleuniger der Formel

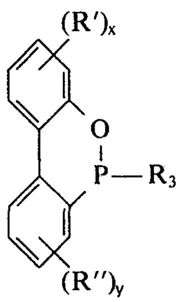

(8)

entspricht, worin

$R_3$ der Formel

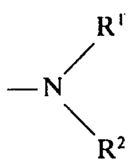

(9)

entspricht, worin

$R^1$ und $R^2$ unabhängig voneinander Wasserstoff, gegebenenfalls substituiertes Alkyl mit 1 bis 22 Kohlenstoffatomen, gegebenenfalls substituiertes Alkenyl mit 2 bis 18 Kohlenstoffatomen, gegebenenfalls substituiertes Alkinyl mit 2 bis 18 Kohlenstoffatomen, gegebenenfalls substituiertes Cycloalkyl mit 6 bis 8 Kohlenstoffatomen, gegebenenfalls substituiertes Aryl oder ein gegebenenfalls substituierter, gesättigter oder ungesättigter, mindestens ein Stickstoffatom enthaltender heterocyclischer Rest mit 4 oder 5 Kohlenstoffatomen sind, oder worin $R^1$ und $R^2$ zusammen einen zweiwertigen Rest zur Bildung eines 5- oder 6gliedrigen, gegebenenfalls ein weiteres Heteroatom enthaltenden, gegebenenfalls substituierten, gesättigten Ringes sind, und R', R'', x und y die in Anspruch 3 angegebenen Bedeutungen haben.

5. Photographisches Aufzeichnungsmaterial nach Anspruch 4, dadurch gekennzeichnet, daß der Entwicklungsbeschleuniger der Formel

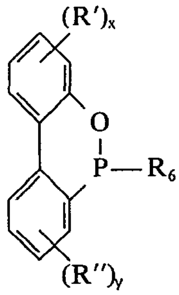

(14)

entspricht, worin $R_6$ der Formel

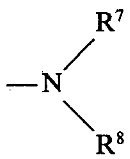

(15)

entspricht, worin

$R^7$ und $R^8$ unabhängig voneinander Wasserstoff, Alkyl mit 1 bis 12 Kohlenstoffatomen, Alkenyl mit 2 bis 6 Kohlenstoffatomen, Cyclohexyl, Cyclooctyl, gegebenenfalls mit Alkyl mit 1 bis 6 Kohlenstoffatomen substituiertes Phenyl, wobei der Phenylrest 1, 2 oder 3 solcher Substituenten tragen kann, oder gegebenenfalls mit Alkyl mit 1 bis 4 Kohlenstoffatomen substituiertes Pyrrolidinyl oder Piperidinyl sind, wobei die heterocyclischen Reste 1 bis 6 solcher Alkylsubstituenten tragen können, oder worin $R^7$ und $R^8$ zusammen einen Rest der Formel

$-(CH_2)_4-$ $-(CH_2)_5-$ $-CH_2CH_2-O-CH_2CH_2-$ oder

$-CH_2CH_2-NH-CH_2CH_2-$

bilden, und R', R", x und y die in Anspruch 4 angegebenen Bedeutungen haben.

6. Photographisches Aufzeichnungsmaterial nach Anspruch 3, dadurch gekennzeichnet, daß der Entwicklungsbeschleuniger der Formel

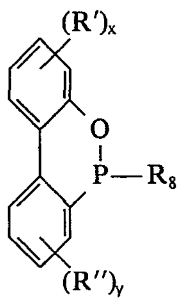

(18)

entspricht, worin

$R_8$ der Formel

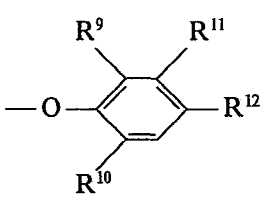

(19)

entspricht, worin

$R^9$ und $R^{10}$ unabhängig voneinander Wasserstoff oder gegebenenfalls substituiertes Alkyl mit 1 bis 12 Kohlenstoffatomen sind,

$R^{11}$ Wasserstoff oder gegebenenfalls substituiertes Alkyl mit 1 bis 4 Kohlenstoffatomen,

$R^{12}$ Wasserstoff, gegebenenfalls substituiertes Alkyl mit 1 bis 12 Kohlenstoffatomen, gegebenenfalls substituiertes Alkoxy mit 1 bis 18 Kohlenstoffatomen, Alkoxycarbonyl mit 2 bis 24 Kohlenstoffatomen, wobei der Alkoxyteil weiter substituiert sein kann, gegebenenfalls substituiertes Thioalkyl mit 1 bis 18 Kohlenstoffatomen oder der Formel

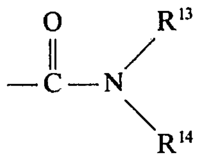

(20)

entspricht, worin
$R^{13}$ und $R^{14}$ unabhängig voneinander Wasserstoff, gegebenenfalls substituiertes Alkyl mit 1 bis 4 Kohlenstoffatomen oder Alkenyl mit 3 bis 6 Kohlenstoffatomen sind, oder
$R^{12}$ und $R^{11}$ zusammen diejenigen Atome sind, um zusammen mit den Kohlenstoffatomen, an die sie gebunden sind, einen gegebenenfalls substituierten, gesättigten oder ungesättigten, 5- oder 6gliedrigen Ring zu bilden und
R', R'', x und y die in Anspruch 3 angegebenen Bedeutungen haben.

7. Photographisches Aufzeichnungsmaterial nach Anspruch 6, dadurch gekennzeichnet, daß der Entwicklungsbeschleuniger der Formel

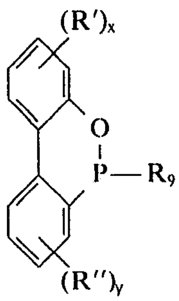

(21)

entspricht, worin $R_9$ der Formel

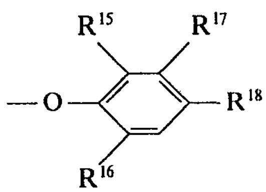

(22)

entspricht, worin
$R^{15}$ und $R^{16}$ unabhängig voneinander Wasserstoff oder gegebenenfalls mit substituiertem Phenyl substituiertes Alkyl mit 1 bis 12 Kohlenstoffatomen sind,
$R^{17}$ Wasserstoff oder Alkyl mit 1 bis 4 Kohlenstoffatomen,
$R^{18}$ Wasserstoff, gegebenenfalls mit Alkoxy mit 1 bis 18 Kohlenstoffatomen oder mit Alkoxycarbonyl mit 2 bis 24 Kohlenstoffatomen substituiertes Alkyl mit 1 bis 12 Kohlenstoffatomen, Alkoxy mit 1 bis 12 Kohlenstoffatomen, Alkoxycarbonyl mit 2 bis 24 Kohlenstoffatomen, Thioalkyl mit 1 bis 18 Kohlenstoffatomen oder der Formel

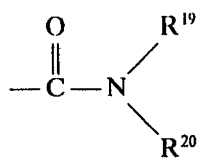

(23)

entspricht, worin
$R^{19}$ und $R^{20}$ unabhängig voneinander Wasserstoff oder Alkyl mit 1 bis 4 Kohlenstoffatomen sind, oder worin
$R^{18}$ und $R^{17}$ zusammen diejenigen Atome sind, um zusammen mit den Kohlenstoffatomen, an die sie gebunden sind, einen gegebenenfalls mit Alkyl mit 1 bis 4 Kohlenstoffatomen substituierten, gesättigten, 5- oder 6gliedrigen Ring zu bilden, wobei dieser mit bis zu 4 solcher Alkylsubstituenten substituiert sein kann, und
R', R'', x und y die in Anspruch 6 angegebenen Bedeutungen haben.

8. Photographisches Aufzeichnungsmaterial nach Anspruch 3, dadurch gekennzeichnet, daß der Entwicklungsbeschleuniger der Formel

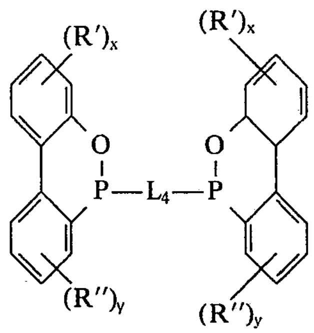

(26)

entspricht, worin
$L_4$ ein Rest der Formel $N-Z_3$, worin $Z_3$ Alkyl mit 1 bis 16 Kohlenstoffatomen oder Cyclohexyl ist, ein 5- oder 6gliedriger, gesättigter, mindestens 2 Stickstoffatome enthaltender Ring, wobei die Bindungen dieses Ringes zu den Oxaphosphorinresten durch die Stickstoffatome erfolgen, oder $L_4$ ein Rest der Formel

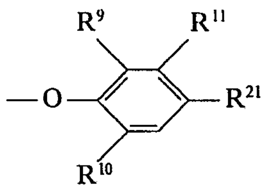

(27)

ist, worin
$R^{21}$ einem Rest der Formeln

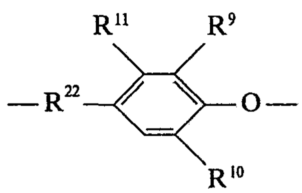

(28)

oder

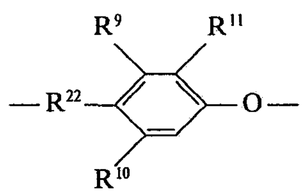

(29)

entspricht, worin
$R^{22}$ $-O-$, $-S-$ oder $=CR^{51}R^{61}$ ist, worin $R^{51}$ und $R^{61}$ unabhängig voneinander Wasserstoff oder Alkyl mit 1 bis 6 Kohlenstoffatomen sind, und $R^9$, $R^{10}$ und $R^{11}$ die in Anspruch 6 angegebenen Bedeutungen haben, oder
$L_4$ der Formel

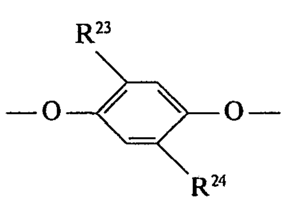

(30)

entspricht, worin
$R^{23}$ und $R^{24}$ unabhängig voneinander Wasserstoff, gegebenenfalls substituiertes Alkyl mit 1 bis 18 Kohlenstoffatomen oder gegebenenfalls substituiertes Alkoxy mit 1 bis 4 Kohlenstoffatomen sind, und
R′, R″, x und y die in Anspruch 3 angegebenen Bedeutungen haben.

9. Photographisches Aufzeichnungsmaterial nach Anspruch 8, dadurch gekennzeichnet, daß der Entwicklungsbeschleuniger der Formel

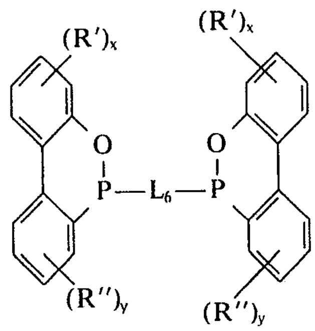

(40)

entspricht, worin
$L_6$ ein Rest der Formel $=N-Z_3$, worin $Z_3$ die in Anspruch 8 angegebenen Bedeutungen hat, oder ein Rest der Formeln

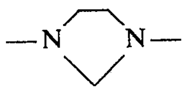

(33)

oder

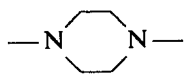

(34)

ist, oder $L_6$ der Formel

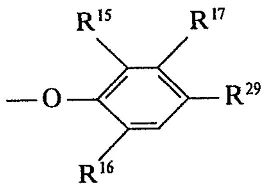

(41)

entspricht, worin
$R^{29}$ einem Rest der Formeln

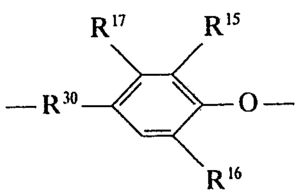

(42)

oder

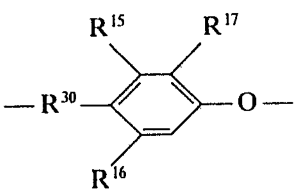

(43)

entspricht, worin
$R^{30}$ $=CR^{51}R^{61}$ ist und
$R^{15}$, $R^{16}$ und $R^{17}$ sowie $R^{51}$ und $R^{61}$ die in Anspruch 7 angegebenen Bedeutungen haben, oder $L_6$ der Formel

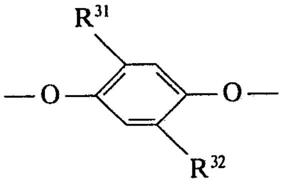

(44)

entspricht, worin
$R^{31}$ und $R^{32}$ unabhängig voneinander Wasserstoff oder Alkyl mit 1 bis 12 Kohlenstoffatomen sind, und
R', R'', x und y die in Anspruch 8 angegebenen Bedeutungen haben.

10. Photographisches Aufzeichnungsmaterial nach Anspruch 3, dadurch gekennzeichnet, daß der Entwicklungsbeschleuniger der Formel

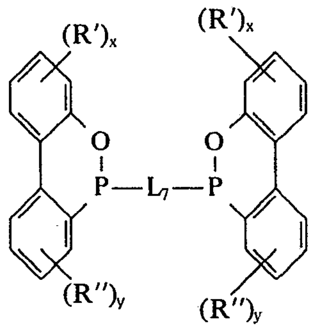

(46)

entspricht, worin
$L_7$ ein Rest der Formel $-NB_5-E_3-NB_6-$ ist, worin $B_5$ und $B_6$ unabhängig voneinander Wasserstoff, Methyl, Äthyl oder den Rest A sind, und worin $E_3$ Alkylen mit 1 bis 6 Kohlenstoffatomen oder

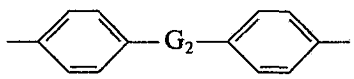

ist, worin
$G_2$ $-O-$, $-S-$ oder $=CK_3K_4$ ist, worin $K_3$ und $K_4$ unabhängig voneinander Wasserstoff oder Alkyl mit 1 bis 4 Kohlenstoffatomen sind, und
R', R'', x und y die in Anspruch 3 angegebenen Bedeutungen haben.

11. Photographisches Aufzeichnungsmaterial nach einem der Ansprüche 1 bis 10, dadurch gekennzeichnet, daß der Entwicklungsbeschleuniger der Formel

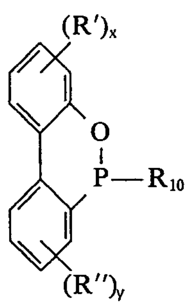

(48)

entspricht, worin
$R_{10}$ der Formel

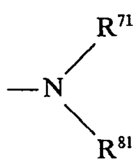

entspricht, worin
$R^{71}$ Wasserstoff, Alkyl mit 1 bis 12 Kohlenstoffatomen, Cyclohexyl oder Cyclooctyl, und
$R^{81}$ Alkyl mit 1 bis 12 Kohlenstoffatomen, Cyclohexyl, Cyclooctyl, Alkenyl mit 2 bis 6 Kohlenstoffatomen, gegebenenfalls mit Alkyl mit 1 bis 6 Kohlenstoffatomen, substituiertes Phenyl, wobei dieses 1 oder 2 solcher Alkylsubstituenten tragen kann, oder gegebenenfalls mit Alkyl mit 1 bis 4 Kohlenstoffatomen substituiertes Piperidinyl ist, wobei dieses 1 bis 4 solcher Alkylsubstituenten tragen kann, oder worin
$R^{81}$ und $R^{71}$ zusammen einen Rest der Formeln

$-(CH_2)_4-$ $-(CH_2)_5-$ $-CH_2CH_2-O-CH_2CH_2-$ oder
$-CH_2CH_2-NH-CH_2CH_2-$

bilden, oder worin

$R_{10}$ der Formel

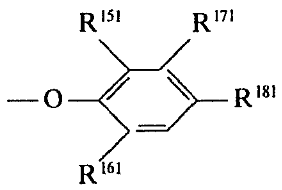

(50)

entspricht, worin
$R^{151}$ und $R^{161}$ unabhängig voneinander Wasserstoff, Alkyl mit 1 bis 8 Kohlenstoffatomen, Benzyl oder Phenyläthyl sind, wobei die Phenylreste mit Alkyl mit 1 bis 4 Kohlenstoffatomen substituiert sein können,
$R^{171}$ Wasserstoff, Methyl oder Äthyl und
$R^{181}$ Wasserstoff, gegebenenfalls mit Alkoxycarbonyl mit 2 bis 24 Kohlenstoffatomen substituiertes Alkyl mit 1 bis 8 Kohlenstoffatomen, Alkoxy mit 1 bis 8 Kohlenstoffatomen oder Alkoxycarbonyl mit 2 bis 19 Kohlenstoffatomen ist, oder $R^{181}$ zusammen mit $R^{171}$ diejenigen Atome bedeutet, um zusammen mit den Kohlenstoffatomen, an die sie gebunden sind, einen gegebenenfalls mit Alkyl mit 1 bis 4 Kohlenstoffatomen substituierten, gesättigten, 5gliedrigen Ring zu bilden, wobei dieser mit bis zu 4 solcher Alkylsubstituenten substituiert sein kann,
oder worin $R_{10}$ der Formel

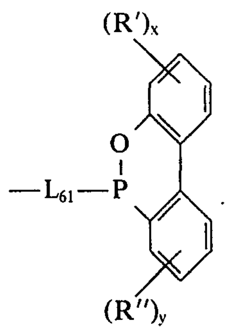

(51)

entspricht, worin
$L_{61}$ ein Rest der Formel $=N-Z_4$, worin $Z_4$ Alkyl mit 1 bis 12 Kohlenstoffatomen oder Cyclohexyl ist, ein Rest der Formeln

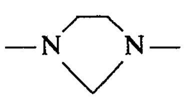

(33)

oder

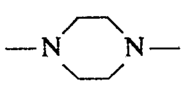

(34)

oder

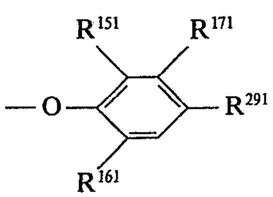

(52)

ist, worin
$R^{291}$ einem Rest der Formeln

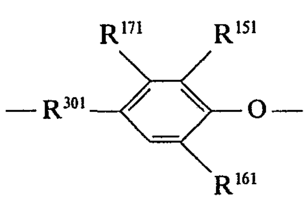

(53)

oder

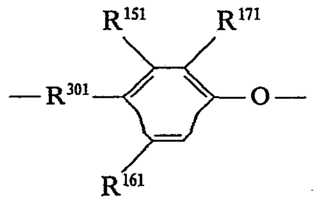

(54)

entspricht, worin
$R^{301} = CR^{52}R^{62}$ ist, worin $R^{52}$ und $R^{62}$ unabhängig voneinander Wasserstoff oder Alkyl mit 1 bis 4 Kohlenstoffatomen sind,
oder worin $L_{61}$ der Formel

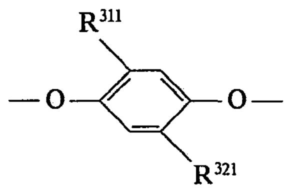

(55)

entspricht, worin
$R^{311}$ und $R^{321}$ unabhängig voneinander Wasserstoff oder Alkyl mit 1 bis 8 Kohlenstoffatomen sind,
oder worin $R_{10}$ der Formel

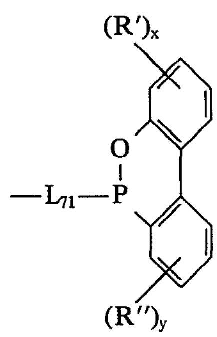

(56)

entspricht, worin
$L_{71}$ ein Rest der Formel $-NB_7-E_4-NB_8-$ ist, worin $B_7$ und $B_8$ unabhängig voneinander Wasserstoff oder den Rest A bedeuten, und $E_4$ Alkylen mit 1 bis 6 Kohlenstoffatomen oder

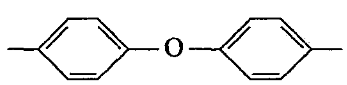

ist, und worin R', R'', x und y die in Anspruch 1 angegebenen Bedeutungen haben.

12. Photographisches Aufzeichnungsmaterial nach Anspruch 11, dadurch gekennzeichnet, daß der Entwicklungsbeschleuniger der Formel

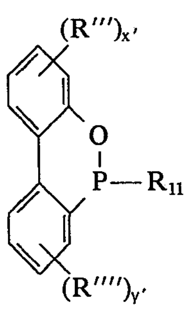

(57)

entspricht, worin
$R_{11}$ der Formel

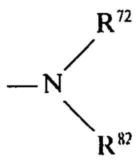

(58)

entspricht, worin
$R^{72}$ Wasserstoff, Alkyl mit 1 bis 8 Kohlenstoffatomen oder Cyclohexyl und
$R^{82}$ Alkyl mit 1 bis 8 Kohlenstoffatomen, Cyclohexyl, Allyl, gegebenenfalls mit Alkyl mit 1 bis 4 Kohlenstoffatomen substituiertes Phenyl, wobei dieses 1 oder 2 solcher Alkylsubstituenten tragen kann, oder gegebenenfalls mit Methyl substituiertes Piperidin-4-yl ist, wobei dieses 1 bis 4 Methylgruppen tragen kann, oder worin $R^{82}$ und $R^{72}$ zusammen einen Rest der Formeln

$—(CH_2)_5—$ oder $—CH_2CH_2—NH—CH_2CH_2—$

bilden, oder worin
$R_{11}$ der Formel

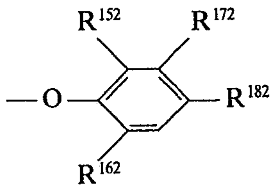

(59)

entspricht, worin
$R^{152}$ und $R^{162}$ unabhängig voneinander Wasserstoff, Alkyl mit 1 bis 8 Kohlenstoffatomen oder Benzyl sind, wobei der Phenylrest mit Methylgruppen substituiert sein kann,
$R^{172}$ Wasserstoff oder Methyl und
$R^{182}$ Wasserstoff, Alkyl mit 1 bis 8 Kohlenstoffatomen, mit Alkoxycarbonyl mit 2 bis 19 Kohlenstoffatomen substituiertes Alkyl mit 1 bis 4 Kohlenstoffatomen, Methoxy oder Alkoxycarbonyl mit 2 bis 19 Kohlenstoffatomen ist, oder $R^{182}$ zusammen mit $R^{172}$ diejenigen Atome bedeutet, um zusammen mit den Kohlenstoffatomen, an die sie gebunden sind, einen gegebenenfalls mit 1 bis 4 Methylgruppen substituierten, gesättigten, 5gliedrigen Ring zu bilden, oder worin
$R_{11}$ der Formel

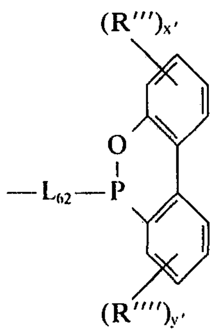

(60)

entspricht, worin
$L_{62}$ ein Rest der Formel $=N-Z_4$ ist, worin $Z_4$ die in Anspruch 11 angegebenen Bedeutungen hat, oder der Formel

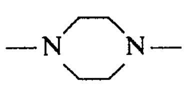

(34)

oder

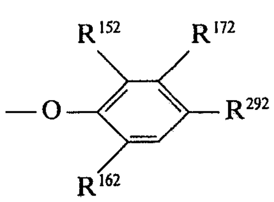

(61)

entspricht, worin
$R^{292}$ einem Rest der Formeln

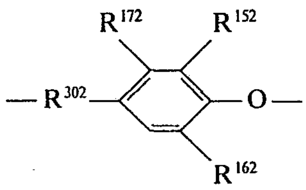

(62)

oder

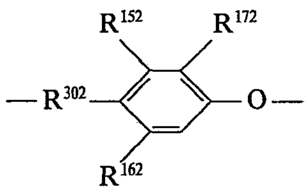

(63)

entspricht, worin
$R^{302}$ $-CH_2-$, $-CHCH_3-$ oder $-C(CH_3)_2-$ ist,
oder worin $L_{62}$ der Formel

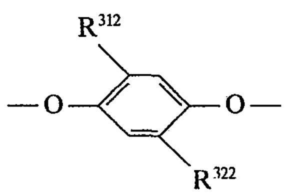

(64)

entspricht, worin
$R^{312}$ und $R^{322}$ unabhängig voneinander Wasserstoff oder Alkyl mit 1 bis 4 Kohlenstoffatomen sind, oder worin $R_{11}$ der Formel

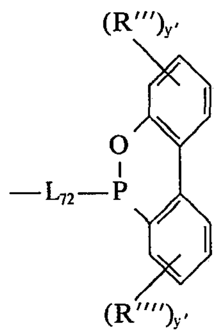

(65)

entspricht, worin
$L_{72}$ ein Rest der Formel $-NB_7-E_5-NB_8-$ ist, worin $B_7$ und $B_8$ die in Anspruch 11 angegebenen Bedeutungen haben, und $E_5$ Alkylen mit 1 bis 6 Kohlenstoffatomen ist, und worin R''', R'''' unabhängig voneinander Wasserstoff, Methyl, Äthyl, Chlor oder Brom, und x' und y' unabhängig voneinander 0 oder 1 sind.

13. Verwendung des photographischen Materials nach einem der Ansprüche 1 bis 12 zur Herstellung von photographischen Bildern.

14. Verfahren zur Herstellung photographischer Materialien, dadurch gekennzeichnet, daß ein Entwicklungsbeschleuniger nach einem der Ansprüche 1 bis 12 in eine Schicht des photographischen Materials eingearbeitet wird.

15. Entwicklungsbad für photographisches Aufzeichnungsmaterial, dadurch gekennzeichnet, daß es einen Entwicklungsbeschleuniger nach einem der Ansprüche 1 bis 12 in einer Menge von 1 bis 50 g pro Liter enthält.

**Claims**

1. A photographic recording material which contains at least one development accelerator in at least one silver halide emulsion layer or in a colloid layer adjacent to the silver halide emulsion layer, wherein the development accelerator is of the formula

$$A—R \qquad (1)$$

in which A is a dibenzo[c,e][1,2]oxaphosphorine radical of the formula

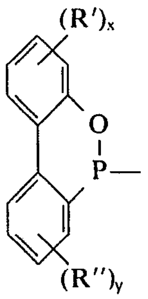

(2)

in which each of R′ and R″ independently of the other is hydrogen, substituted or unsubstituted alkyl having 1 to 4 carbon atoms or halogen, each of x and y independently of the other is 0, 1, 2 or 3 and R is substituted or unsubstituted amino, substituted or unsubstituted cyclic amino, substituted or unsubstituted aryloxy or a group of the formula

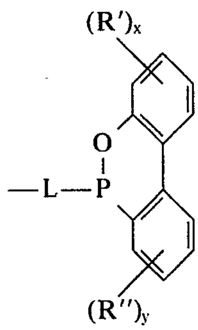

(3)

in which L is a radical of the formula $=N-Z$, in which Z is substituted or unsubstituted alkyl or cycloalkyl, or a substituted or unsubstituted 5- or 6membered, saturated or unsaturated ring which contains at least 2 hetero atoms and which is attached to the oxaphosphorine radicals through the hetero atoms, or is substituted or unsubstituted aryleneoxy, substituted or unsubstituted oxyaryleneoxy or a radical of the formula $-NB_1-E-NB_2$, in which each of $B_1$ and $B_2$ independently of the other is hydrogen, alkyl or the radical A, and E is alkylene or

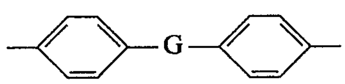

in which G is $-O-$, $-S-$ or alkylene, and R′, R″, x and y are as defined above.

2. A photographic recording material according to claim 1, wherein the development accelerator is of the formula

$$A—R_1 \qquad (4)$$

in which $R_1$ is amino which is unsubstituted or substituted by alkyl, alkenyl, alkynyl, cycloalkyl, aryl or by a heterocyclic radical, substituted or substituted 5- or 6membered cyclic amino, phenoxy which is unsubstituted or substituted by alkyl, alkoxy, alkoxycarbonyl, thioalkyl or carbamoyl, or is a group of the formula

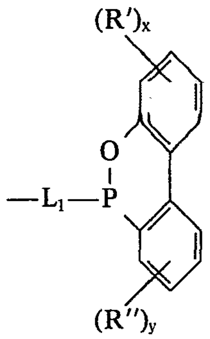

(5)

in which $L_1$ is a radical of the formula $=N-Z$, in which Z is as defined in claim 1, a substituted or unsubstituted 5- or 6membered saturated or unsaturated ring which contains at least 2 hetero atoms and which is attached to the oxaphosphorine radicals through the hetero atoms, or is substituted or substituted aryleneoxy, substituted or unsubstituted oxyaryleneoxy or a radical of the formula $-NB_3-E_1-NB_4-$, in which each of $B_3$ and $B_4$ independently of the other is hydrogen, alkyl having 1 to 4 carbon atoms or the radical A, and $E_1$ is alkylene having 1 to 12 carbon atoms or a radical of the formula

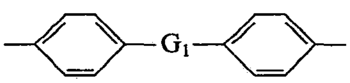

in which $G_1$ is $-O-$, $-S-$ or $=CK_1K_2$, in which each of $K_1$ and $K_2$ independently of the other is hydrogen or alkyl having 1 to 8 carbon atoms, and in which A, R′, R″, x and y are as defined in claim 1.

3. A photographic recording material according to claim 2, wherein the development accelerator is of the formula

$$A-R_2 \qquad (6)$$

in which $R_2$ is amino which is unsubstituted or substituted by alkyl, alkenyl, alkynyl, cycloalkyl, aryl or by a heterocyclic radical, or is substituted or unsubstituted 5- or 6membered cyclic amino, phenoxy which is unsubstituted or substituted by alkyl, alkoxy, alkoxycarbonyl, thioalkyl or carbamoyl, or is a group of the formula

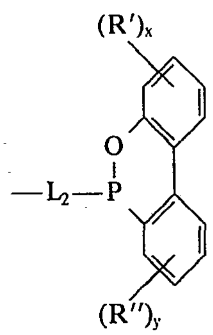

(7)

in which $L_2$ is a radical of the formula $=N-Z_1$, in which $Z_1$ is substituted or unsubstituted alkyl having 1 to 22 carbon atoms or substituted or unsubstituted cycloalkyl having 5 or 6 carbon atoms, or $L_2$ is a substituted or unsubstituted 5- or 6membered, saturated or unsaturated ring which contains at least 2 hetero atoms and which is attached to the oxaphosphorine radicals through the hetero atoms, or is substituted or unsubstituted aryleneoxy, substituted or unsubstituted oxyaryleneoxy or a radical of the formula $-NB_3-E_2-NB_4-$, in which $E_2$ is alkylene having 1 to 8 carbon atoms or

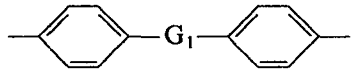

and in which A, R′, R″, x, y, $B_3$, $B_4$ and $G_1$ are as defined in claim 2.

4. A photographic recording material according to claim 3, wherein the development accelerator is of the formula

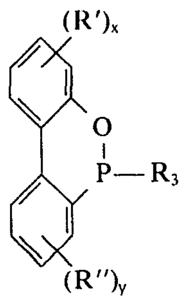

(8)

in which $R_3$ is of the formula

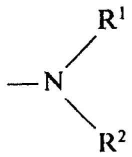

(9)

in which each of $R^1$ and $R^2$ independently of the other is hydrogen, substituted or unsubstituted alkyl having 1 to 22 carbon atoms, substituted or unsubstituted alkenyl having 2 to 18 carbon atoms, substituted or unsubstituted alkynyl having 2 to 18 carbon atoms, substituted or unsubstituted cycloalkyl having 6 to 8 carbon atoms, substituted or unsubstituted aryl or a substituted or unsubstituted, saturated or unsaturated heterocyclic radical containing at least one nitrogen atom and having 4 or 5 carbon atoms, or in which $R^1$ and $R^2$ together are a divalent radical which forms a 5- or 6membered, substituted or unsubstituted, saturated ring which can contain a further hetero atom, and R', R", x and y are as defined in claim 3.

5. A photographic recording material according to claim 4, wherein the development accelerator is of the formula

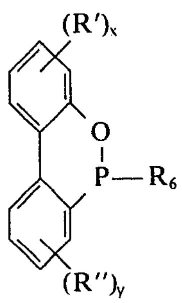

(14)

in which $R_6$ is of the formula

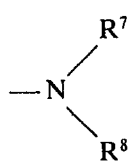

(15)

in which each of $R^7$ and $R^8$ independently of the other is hydrogen, alkyl having 1 to 12 carbon atoms, alkenyl having 2 to 6 carbon atoms, cyclohexyl, cyclooctyl, phenyl which is unsubstituted or substituted by alkyl having 1 to 6 carbon atoms, which phenyl radical can carry 1, 2 or 3 such substituents; or is pyrrolidinyl or piperidinyl, each of which is unsubstituted or substituted by alkyl having 1 to 4 carbon atoms, and the heterocyclic radicals can carry 1 to 6 such alkyl substituents, or in which $R^7$ and $R^8$ together form a radical of the formula

$-(CH_2)_4-$ $-(CH_2)_5-$ $-CH_2CH_2-O-CH_2CH_2-$ or

$-CH_2CH_2-NH-CH_2CH_2-$

and R', R", x and y are as defined in claim 4.

6. A photographic recording material according to claim 3, wherein the development accelerator is of the formula

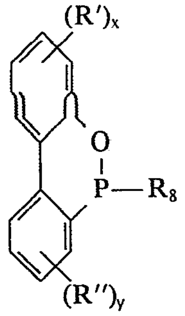

(18)

in which $R_8$ is of the formula

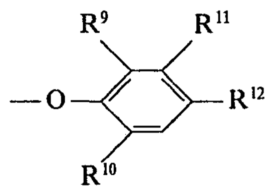

(19)

in which each of $R^9$ and $R^{10}$ independently of the other is hydrogen or substituted or unsubstituted alkyl having 1 to 12 carbon atoms, $R^{11}$ is hydrogen or substituted or unsubstituted alkyl having 1 to 4 carbon atoms, $R^{12}$ is hydrogen, substituted or unsubstituted alkyl having 1 to 12 carbon atoms, substituted or unsubstituted alkoxy having 1 to 18 carbon atoms, alkoxycarbonyl having 2 to 24 carbon atoms, in which the alkoxy moiety can be further substituted, or is substituted or unsubstituted thioalkyl having 1 to 18 carbon atoms or is of the formula

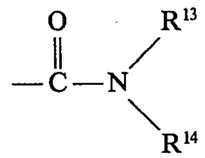

(20)

in which each of $R^{13}$ and $R^{14}$ independently of the other is hydrogen, substituted or unsubstituted alkyl having 1 to 4 carbon atoms or alkenyl having 3 to 6 carbon atoms, or $R^{12}$ and $R^{11}$ together are those atoms which, together with the carbon atoms to which they are attached, form a substituted or unsubstituted, saturated or unsaturated, 5- or 6membered ring, and R', R'', x and y are as defined in claim 3.

7. A photographic recording material according to claim 6, wherein the development accelerator is of the formula

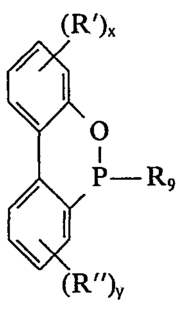

(21)

in which $R_9$ is of the formula

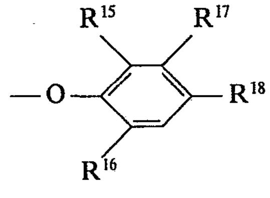

(22)

in which each of $R^{15}$ and $R^{16}$ independently of the other is hydrogen or alkyl having 1 to 12 carbon atoms which is unsubstituted or substituted by substituted phenyl, $R^{17}$ is hydrogen or alkyl having 1 to 4 carbon atoms, $R^{18}$ is hydrogen, alkyl having 1 to 12 carbon atoms which is unsubstituted or substituted by alkoxy having 1 to 18 carbon atoms or by alkoxycarbonyl having 2 to 24 carbon atoms, or is

alkoxy having 1 to 12 carbon atoms, alkoxycarbonyl having 2 to 24 carbon atoms, thioalkyl having 1 to 18 carbon atoms or is of the formula

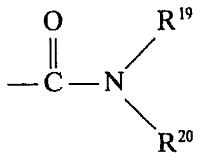

(23)

in which each of $R^{19}$ and $R^{20}$ independently of the other is hydrogen or alkyl having 1 to 4 carbon atoms, or in which $R^{18}$ and $R^{17}$ together are those atoms which, together with the carbon atoms to which they are attached, form a saturated 5- or 6membered ring which is unsubstituted or substituted by 1 to 4 alkyl groups having 1 to 4 carbon atoms, and R', R'', x and y are as defined in claim 6.

8. A photographic recording material according to claim 3, wherein the development accelerator is of the formula

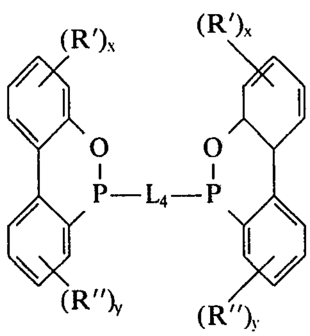

(26)

in which $L_4$ is a radical of the formula $=N-Z_3$ in which $Z_3$ is alkyl having 1 to 16 carbon atoms or cyclohexyl, or $L_4$ is a 5- or 6menbered, saturated ring which contains at least 2 nitrogen atoms and which is attached to the oxaphosphorine radicals through the nitrogen atoms, or $L_4$ is a radical of the formula

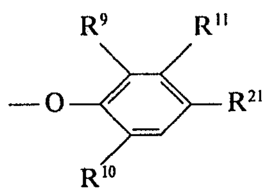

(27)

in which $R^{21}$ is a radical of the formula

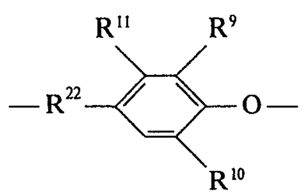

(28)

or

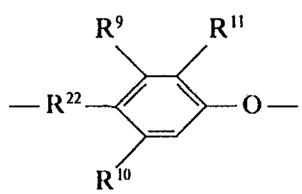

(29)

in which $R^{22}$ is $-O-$, $-S-$ or $=CR^{51}R^{61}$, in which each of $R^{51}$ and $R^{61}$ independently of the other is hydrogen or alkyl having 1 to 6 carbon atoms, and $R^9$, $R^{10}$ and $R^{11}$ are as defined in claim 6, or $L_4$ is of the formula

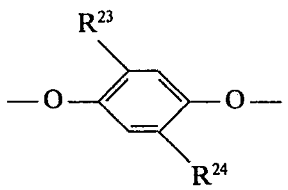

(30)

in which each of $R^{23}$ and $R^{24}$ independently of the other is hydrogen, substituted or unsubstituted alkyl having 1 to 18 carbon atoms or substituted or unsubstituted alkoxy having 1 to 4 carbon atoms, and R′, R″, x and y are as defined in claim 3.

9. A photographic recording material according to claim 8, wherein the development accelerator is of the formula

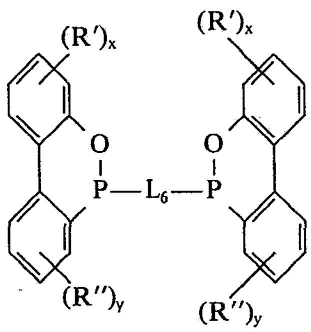

(40)

in which $L_6$ is a radical of the formula $=N-Z_3$, in which $Z_3$ is as defined in claim 8, or is a radical of the formula

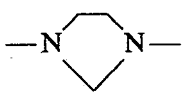

(33)

or

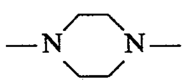

(34)

or $L_6$ is of the formula

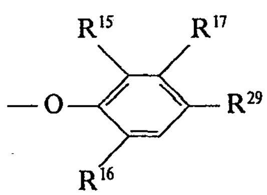

(41)

in which $R^{29}$ is a radical of the formula

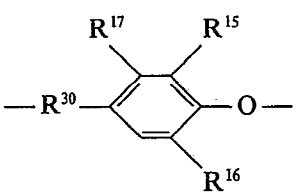

(42)

or

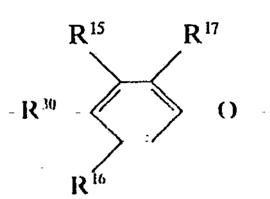

(43)

in which $R^{30}$ is $=CR^{51}R^{61}$ and $R^{15}$, $R^{16}$ and $R^{17}$ as well as $R^{51}$ and $R^{61}$ are as defined in claim 7, or $L_6$ is of the formula

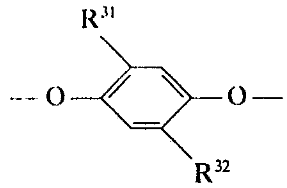

(44)

in which each or $R^{31}$ and $R^{32}$ independently of the other is hydrogen or alkyl having 1 to 12 carbon atoms, and $R^1$, R″, x and y are as defined in claim 8.

10. A photographic recording material according to claim 3, wherein the development accelerator is of the formula

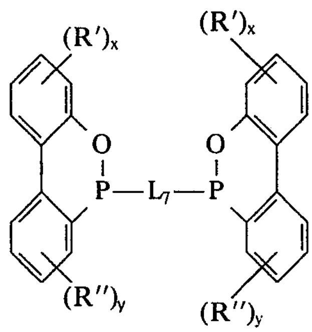

(46)

in which $L_7$ is a radical of the formula $-NB_5-E_3-NB_6-$, in which each of $B_5$ and $B_6$ independently of the other is hydrogen, methyl, ethyl or the radical A and in which $E_3$ is alkylene having 1 to 6 carbon atoms or

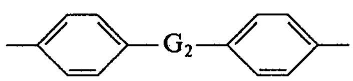

in which $G_2$ is $-O-$, $-S-$, or $=CK_3K_4$, in which each of $K_3$ and $K_4$ independently of the other is hydrogen or alkyl having 1 to 4 carbon atoms, and R′, R″, x and y are as defined in claim 3.

11. A photographic recording material according to any one of claims 1 to 10, wherein the development accelerator is of the formula

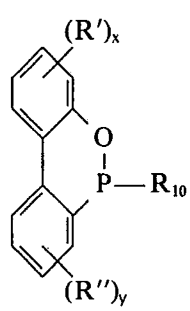

(48)

in which $R_{10}$ is of the formula

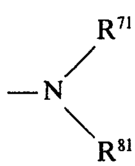

(49)

in which $R^{71}$ is hydrogen, alkyl having 1 to 12 carbon atoms, cyclohexyl or cyclooctyl and $R^{81}$ is alkyl having 1 to 12 carbon atoms, cyclohexyl, cyclooctyl, alkenyl having 2 to 6 carbon atoms, phenyl which is unsubstituted or substituted by alkyl having 1 to 6 carbon atoms and which can carry 1 or 2 such alkyl substituents, or is piperidinyl which is unsubstituted or substituted by alkyl having 1 to 4 carbon atoms and which can carry 1 to 4 such alkyl substituents, or in which $R^{81}$ and $R^{71}$ together form a radical of the formula

$-(CH_2)_4-$ $-(CH_2)_5-$ $-CH_2CH_2-O-CH_2CH_2-$ or

$-CH_2CH_2-NH-CH_2CH_2-$

or in which $R_{10}$ is of the formula

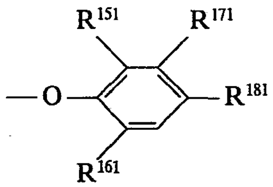

(50)

in which each of $R^{151}$ and $R^{161}$ independently of the other is hydrogen, alkyl having 1 to 8 carbon atoms, benzyl or phenylethyl, wherein the phenyl radicals can be substituted by alkyl having 1 to 4 carbon atoms, $R^{171}$ is hydrogen, methyl or ethyl and $R^{181}$ is hydrogen, alkyl having 1 to 8 carbon atoms which is unsubstituted or substituted by alkoxycarbonyl having 2 to 24 carbon atoms, or is alkoxy having 1 to 8 carbon atoms or alkoxycarbonyl having 2 to 19 carbon atoms, or $R^{181}$ together with $R^{171}$ are those atoms which, together with the carbon atoms to which they are attached, form a saturated 5membered ring which is unsubstituted or substituted by 1 to 4 alkyl groups having 1 to 4 carbon atoms, or in which $R_{10}$ is of the formula

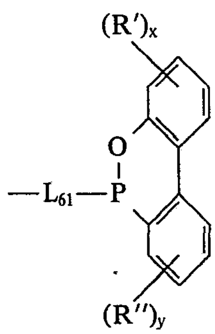

(51)

in which $L_{61}$ is a radical of the formula $=N-Z_4$, in which $Z_4$ is alkyl having 1 to 12 carbon atoms or cyclohexyl, or $L_{61}$ is a radical of the formula

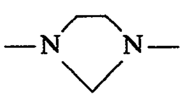

(33)

or

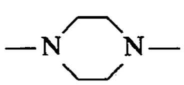

(34)

or

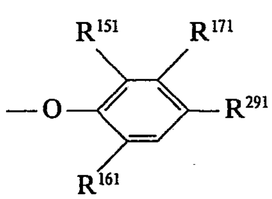

(52)

in which $R^{291}$ is a radical of the formula

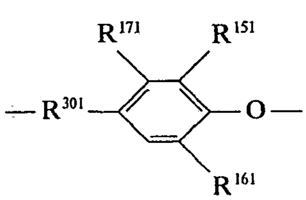

(53)

or

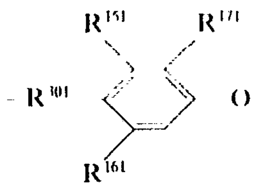

(54)

in which $R^{301}$ is $=CR^{52}R^{62}$, in which each of $R^{52}$ and $R^{62}$ independently of the other is hydrogen or alkyl having 1 to 4 carbon atoms, or in which $L_{61}$ is of the formula

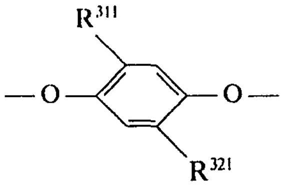

(55)

in which each of $R^{311}$ and $R^{321}$ independently of the other is hydrogen or alkyl having 1 to 8 carbon atoms, or in which $R_{10}$ is of the formula

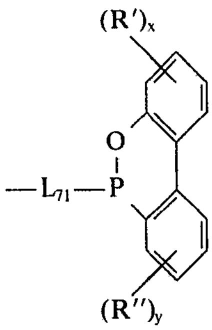

(56)

in which $L_{71}$ is a radical of the formula $-NB_7-E_4-NB_8$, in which each of $B_7$ and $B_8$ independently of the other is hydrogen or the radical A, and $E_4$ is alkylene having 1 to 6 carbon atoms or

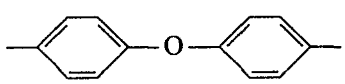

and in which R′, R″, x and y are as defined in claim 1.

12. A photographic recording material according to claim 11, wherein the development accelerator is of the formula

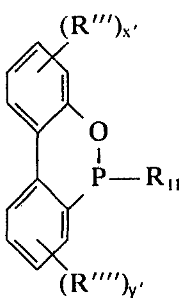

(57)

in which $R_{11}$ is of the formula

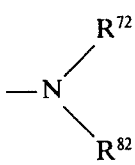

(58)

in which $R^{72}$ is hydrogen, alkyl having 1 to 8 carbon atoms or cyclohexyl and $R^{82}$ is alkyl having 1 to 8 carbon atoms, cyclohexyl, allyl, phenyl which is unsubstituted or substituted by alkyl having 1 to 4 carbon atoms and which can carry 1 or 2 such alkyl substituents, or is piperidin-4-yl which is unsubstituted or substituted by methyl and which can carry 1 to 4 methyl groups, or in which $R^{82}$ and $R^{72}$

together form a radical of the formula

$$-(CH_2)_5- \quad \text{or} \quad -CH_2CH_2-NH-CH_2CH_2-$$

or in which $R_{11}$ is of the formula

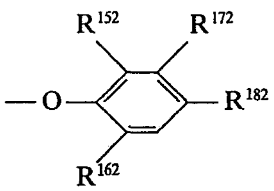

(59)

in which each of $R^{152}$ and $R^{162}$ independently of the other is hydrogen, alkyl having 1 to 8 carbon atoms or benzyl, wherein the phenyl nucleus can be substituted by methyl groups, $R^{172}$ is hydrogen or methyl and $R^{182}$ is hydrogen, alkyl having 1 to 8 carbon atoms, alkyl having 1 to 4 carbon atoms which is substituted by alkoxycarbonyl having 2 to 19 carbon atoms, or is methoxy or alkoxycarbonyl having 2 to 19 carbon atoms, or $R^{182}$ together with $R^{172}$ are those atoms which, together with the carbon atoms to which they are attached, form a saturated 5membered ring which is unsubstituted or substituted by 1 to 4 methyl groups, or in which $R_{11}$ is of the formula

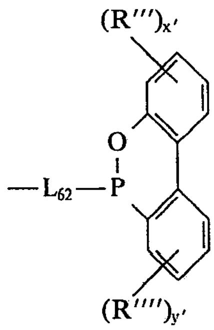

(60)

in which $L_{62}$ is a radical of the formula $=N-Z_4$ in which $Z_4$ is as defined in claim 11, or is of the formula

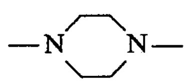

(34)

or

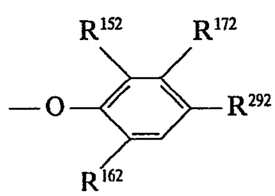

(61)

in which $R^{292}$ is a radical of the formula

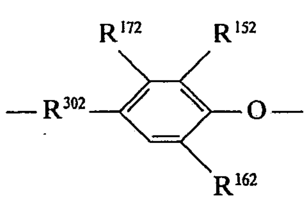

(62)

or

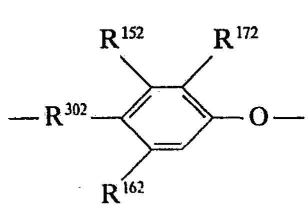

(63)

in which $R^{302}$ is $-CH_2-$, $-CHCH_3-$ or $C(CH_3)_2-$, or in which $L_{62}$ is of the formula

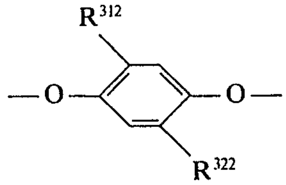

(64)

in which each of $R^{312}$ and $R^{322}$ independently of the other is hydrogen or alkyl having 1 to 4 carbon atoms, or in which $R_{11}$ is of the formula

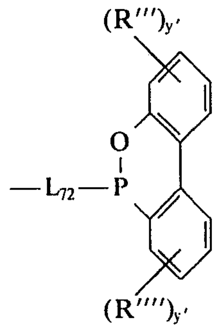

(65)

in which $L_{72}$ is a radical of the formula $-NB_7-E_5-NB_8-$, in which $B_7$ and $B_8$ are as defined in claim 11 and $E_5$ is alkylene having 1 to 6 carbon atoms, and in which each of R''' and R'''' independently of the other is hydrogen, methyl, ethyl, chlorine or bromine, and each of x' and y' independently of the other is 0 or 1.

13. Use of a photographic material according to any one of claims 1 to 12 for producing photographic images.

14. A process for the preparation of a photographic material, which comprises incorporating a development accelerator according to any one of claims 1 to 12 into a layer of said photographic material.

15. A developing bath for photographic recording material, which contains a development accelerator according to any one of claims 1 to 12 in an amount of 1 to 50 g per litre.

**Revendications**

1. Matériau d'enregistrement photographique, contenant dans au moins une couche d'émulsion à l'halogénure d'argent ou dans une couche de colloïde accolée à la couche d'émulsion à l'halogénure d'argent au moins un accélérateur de développement, caractérisé en ce que l'accélérateur de développement correspond à la formule

$$A-R \qquad (1)$$

où A est un radical dibenzo-[c,e][1,2]-oxaphosphorine de formule

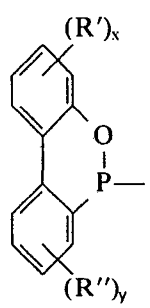

(2)

où R' et R'' sont, indépendamment l'un de l'autre, l'hydrogène, un radical alkyle éventuellement substitué à 1 à 4 atomes de carbone ou un halogène; x et y, indépendamment l'un de l'autre, valent 0, 1, 2 ou 3; et R est un radical amino éventuellement substitué, amino-cyclique éventuellement substitué, aryloxy éventuellement substitué, ou un groupe de formule

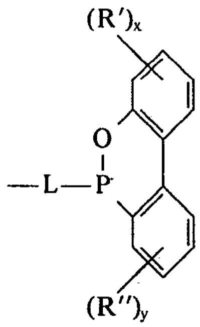

(3)

dans laquelle L est un radical de formule =N—Z, où Z est un groupe alkyle ou cycloalkyle éventuellement substitué, un noyau contenant au moins 2 hétéroatomes, saturé ou insaturé, pentagonal ou hexagonal, éventuellement substitué, les liaisons de ce noyau aux radicaux oxaphosphorine s'effectuant par l'intermédiaire des hétéroatomes, un groupe arylènoxy éventuellement substitué, oxyarylènoxy éventuellement substitué ou un radical de formule $-NB_1-E-NB_2-$, où $B_1$ et $B_2$, indépendamment l'un de l'autre, sont l'hydrogène, un radical alkyle ou le radical A, et E est le radical alkylène ou

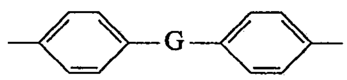

où G est —O—, —S— ou un radical alkylène; et R', R'', x et y ont les définitions données ci-dessus.

2. Metériau d'enregistrement photographique selon la revendication 1, caractérisé en ce que l'accélérateur de développement correspond à la formule

$$A-R_1 \qquad (4)$$

où $R_1$ est un groupe amino éventuellement substitué par un groupe alkyle, alcényle, alcynyle, cycloalkyle, aryle ou un radical hétérocyclique, amino-cyclique pentagonal ou hexagonal, éventuellement substitué, phénoxy éventuellement substitué par un groupe alkyle, alcoxy, alcoxycarbonyle, thioalkyle ou carbamoyle, ou un groupe de formule

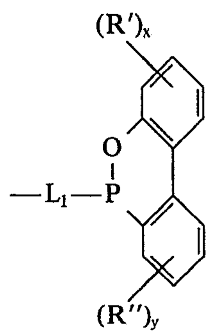

(5)

dans laquelle $L_1$ est un radical de formule =N—Z, où Z a la signification donnée dans la revendication 1, un noyau contenant au moins deux hétéroatomes, saturé ou insaturé, pentagonal ou hexagonal, éventuellement substitué, les liaisons de ce noyau aux radicaux oxaphosphorine s'effectuant par l'intermediaire des hétéroatomes, un groupe arylènoxy éventuellement substitué, oxyarylènoxy éventuellement substitué ou un radical de formule $-NB_3-E_1-NB_4-$, où $B_3$ et $B_4$, indépendamment l'un de l'autre, sont l'hydrogène, un groupe alkyle à 1 à 4 atomes de carbone ou le radical A, et $E_1$ est un groupe alkylène à 1 à 12 atomes de carbone ou un radical de formule

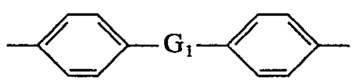

dans laquelle $G_1$ est —O—, —S— ou $=CK_1K_2$, où $K_1$ et $K_2$, indépendamment l'un de l'autre, sont chacun l'hydrogène ou un groupe alkyle à 1 à 8 atomes de carbone; et où A et R', R'', x et y ont la signification donnée dans la revendication 1.

3. Matériau d'enregistrement photographique selon la revendication 2, caractérisé en ce que l'accélérateur de développement correspond à la formule

$$A-R_2 \qquad (6)$$

où $R_2$ est un groupe amino éventuellement substitué par un groupe alkyle, alcényle, alcynyle, cycloalkyle, aryle ou un radical hétérocyclique, amino-cyclique pentagonal ou hexagonal éventuellement substitué, phénoxy éventuellement substitué par un groupe alkyle, alcoxy, alcoxycarbonyle, thioalkyle ou carbamoyle, ou un groupe de formule

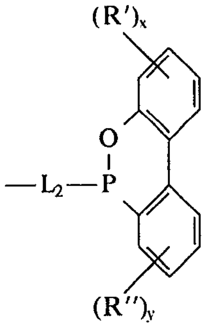

(7)

dans laquelle $L_2$ est un radical de formule $=N-Z_1$, où $Z_1$ est un groupe alkyle à 1 à 22 atomes de carbone éventuellement substitué ou cycloalkyle à 5 ou 6 atomes de carbone éventuellement substitué, un noyau contenant au moins 2 hétéroatomes, saturé ou insaturé, pentagonal ou hexagonal, éventuellement substitué, les liaisons de ce noyau aux radicaux oxaphosphorine s'effectuant par l'intermédiaire des hétéroatomes, un groupe arylènoxy éventuellement substitué, oxyarylènoxy éventuellement substitué ou un radical de formule $-NB_3-E_2-NB_4-$, où $E_2$ est un groupe alkylène à 1 à 8 atomes de carbone, ou

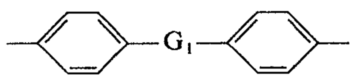

et où A, R', R", x, y, $B_3$, $B_4$ et $G_1$ ont la signification donnée dans la revendication 2.

4. Matériau d'enregistrement photographique selon la revendication 3, caractérisé en ce que l'accélérateur de développement correspond à la formule

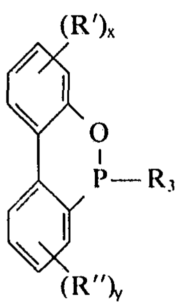

(8)

où $R_3$ correspond à la formule

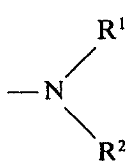

(9)

dans laquelle $R^1$ et $R^2$, indépendamment l'un de l'autre, sont l'hydrogène, un groupe alkyle à 1 à 22 atomes de carbone éventuellement substitué, alcényle à 2 à 18 atomes de carbone éventuellement substitué, alcynyle à 2 à 18 atomes de carbone éventuellement substitué, cycloalkyle à 6 à 8 atomes de carbone éventuellement substitué, aryle éventuellement substitué ou un radical hétérocyclique à 4 ou 5 atomes de carbone contenant au moins un atome d'azote, saturé ou insaturé, éventuellement substitué, ou bien dans laquelle $R^1$ et $R^2$ sont ensemble un radical bivalent destiné à la formation d'un noyau saturé, éventuellement substitué, contenant éventuellement un autre hétéroatome, pentagonal ou hexagonal; et R', R", x et y ont la signification donnée dans la revendication 3.

5. Matériau d'enregistrement photographique selon la revendication 4, caractérisé en ce que l'accélérateur de développement correspond à la formule

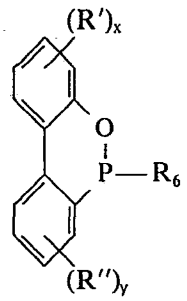

(14)

où $R_6$ a la formule

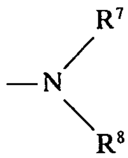

(15)

dans laquelle $R^7$ et $R^8$, indépendamment l'un de l'autre, sont l'hydrogène, un groupe alkyle à 1 à 12 atomes de carbone, alcényle à 2 à 6 atomes de carbone, cyclohexyle, cyclooctyle, phényle éventuellement substitué par un groupe alkyle à 1 à 6 atomes de carbone, le radical phényle pouvant porter 1, 2 ou 3 de ces substituants, ou pyrrolidinyle ou pipéridinyle éventuellement substitués par un groupe alkyle à 1 à 4 atomes de carbone, les radicaux hétérocycliques pouvant porter 1 à 6 de ces substituants alkyle; ou bien dans laquelle $R^7$ et $R^8$ forment ensemble un radical de formule

$-(CH_2)_4-$ $-(CH_2)_5-$ $-CH_2CH_2-O-CH_2CH_2-$ ou

$-CH_2CH_2-NH-CH_2CH_2-$

et R', R'', x et y ont la signification donnée dans la revendication 4.

6. Matériau d'enregistrement photographique selon la revendication 3, caractérisé en ce que l'accélérateur de développement correspond à la formule

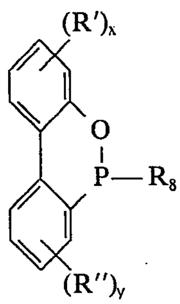

(18)

où $R_8$ correspond à la formule

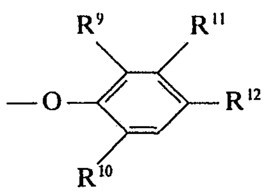

(19)

dans laquelle $R^9$ et $R^{10}$, indépendamment l'un de l'autre, sont l'hydrogène ou un groupe alkyle à 1 à 12 atomes de carbone éventuellement substitué; $R^{11}$ est l'hydrogène ou un groupe alkyle à 1 à 4 atomes de carbone éventuellement substitué; $R^{12}$ est l'hydrogène, un groupe alkyle à 1 à 12 atomes de carbone éventuellement substitué, alcoxy à 1 à 18 atomes de carbone éventuellement substitué, alcoxycarbonyle à 2 à 24 atomes de carbone, la partie alcoxy pouvant avoir des substitutions supplémentaires, thioalkyle à 1 à 18 atomes de carbone éventuellement substitué, ou correspond à la formule

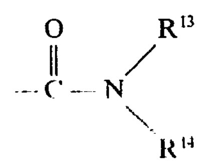

(20)

où $R^{13}$ et $R^{14}$, indépendamment l'un de l'autre, sont l'hydrogène, un groupe alkyle à 1 à 4 atomes de carbone éventuellement substitué ou alcényle à 3 à 6 atomes de carbone, ou bien $HR^{12}$ et $R^{11}$ forment ensemble les atomes nécessaires pour former, en association avec les atomes de carbone auxquels ils sont liés, un noyau pentagonal ou hexagonal, saturé ou insaturé, éventuellement substitué; et R', R'', x et y ont la signification donnée dans la revendication 3.

7. Matériau d'enregistrement photographique selon la revendication 6, caractérisé en ce que l'accélérateur de développement correspond à la formule

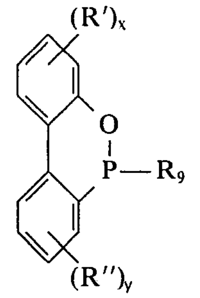

(21)

où $R_9$ correspond à la formule

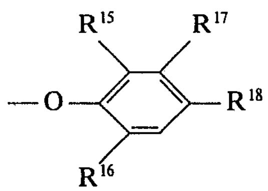

(22)

dans laquelle $R^{15}$ et $R^{16}$, indépendamment l'n de l'autre, sont l'hydrogène ou un groupe alkyle à 1 à 12 atomes de carbone éventuellement substitué par un groupe phényle substitué; $R^{17}$ est l'hydrogène ou un groupe alkyle à 1 à 4 atomes de carbone; $R^{18}$ est l'hydrogène, un groupe alkyle à 1 à 12 atomes de carbone, éventuellement substitué par un groupe alcoxy à 1 à 18 atomes de carbone ou alcoxycarbonyle à 2 à 24 atomes de carbone, alcoxy à 1 à 12 atomes de carbone, alcoxycarbonyle à 2 à 24 atomes de carbone, thioalkyle à 1 à 18 atomes de carbone, ou correspond à la formule

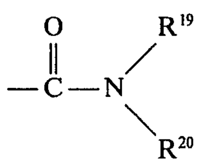

(23)

où $R^{19}$ et $R^{20}$, indépendamment l'un de l'autre, sont l'hydrogène ou un groupe alkyle à 1 à 4 atomes de carbone;
ou bien dans laquelle $R^{18}$ et $R^{17}$ sont ensemble les atomes servant à former, en association avec les atomes de carbone auxquels ils sont liés, un noyau pentagonal ou hexagonal, saturé, éventuellement substitué par un groupe alkyle à 1 à 4 atomes de carbone, ce noyau pouvant être substitué par jusqu'à 4 de ces substituants alkyle; et R', R'', x et y ont la signification donnée dans la revendication 6.

8. Matériau d'enregistrement photographique selon la revendication 3, caractérisé en ce que l'accélérateur de développement correspond à la formule

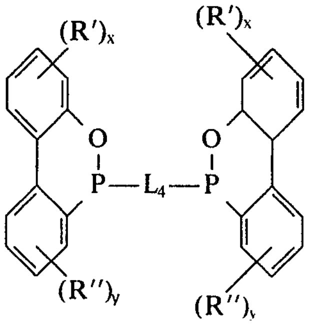

(26)

dans laquelle $L_4$ est un radical de formule $N-Z_3$, où $Z_3$ est un groupe alkyle à 1 à 16 atomes de carbone ou cyclohexyle, un noyau contenant au moins 2 atomes d'azote, saturé, pentagonal ou hexagonal, les

liaisons de ce noyau aux radicaux oxaphosphorine s'effectuant par l'intermédiaire des atomes d'azote, ou bien $L_4$ est un radical de formule

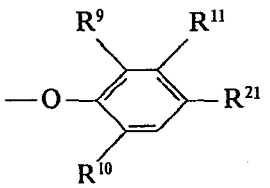

(27)

où $R^{21}$ est un radical de formules

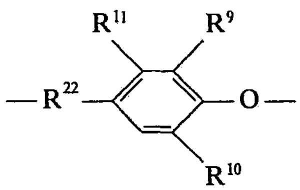

(28)

ou

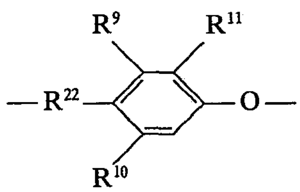

(29)

où $R^{22}$ est $-O-$, $-S-$ ou $=CR^{51}R^{61}$ où $R^{51}$ et $R^{61}$ sont, indépendamment l'un de l'autre, l'hydrogène ou un groupe alkyle à 1 à 6 atomes de carbone, et $R^9$, $R^{10}$ et $R^{11}$ ont la signification donnée dans la revendication 6; ou bien $L_4$ correspond à la formule

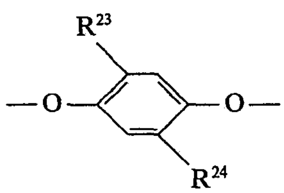

(30)

où $R^{23}$ et $R^{24}$ sont, indépendamment l'un de l'autre, l'hydrogène, un groupe alkyle à 1 à 18 atomes de carbone éventuellement substitué ou alcoxy à 1 à 4 atomes de carbone éventuellement substitué; et R', R'', x et y ont la signification donnée dans la revendication 3.

9. Matériau d'enregistrement photographique selon la revendication 8, caractérisé en ce que l'accélérateur de développement correspond à la formule

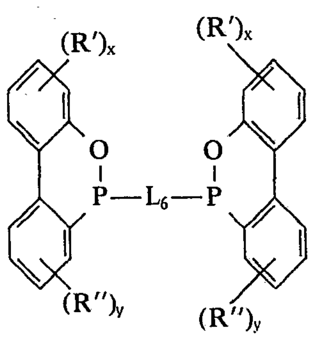

(40)

dans laquelle $L_6$ est un radical de formule $=N-Z_3$, où $Z_3$ a la signification donnée dans la revendication 8, ou un radical de formules

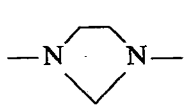

(33)

ou

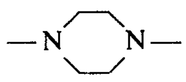

(34)

ou bien $L_6$ correspond à la formule

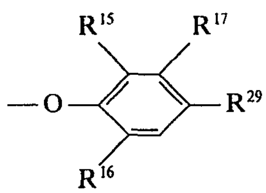

(41)

dans laquelle $R^{29}$ est un radical de formules

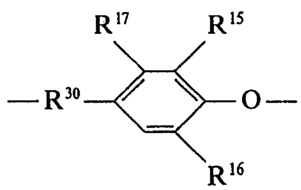

(42)

ou

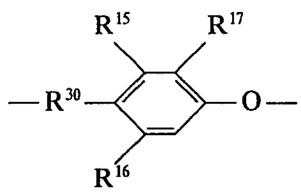

(43)

où $R^{30}$ est $=CR^{51}R^{61}$ et $R^{15}$, $R^{16}$ et $R^{17}$, ainsi que $R^{51}$ et $R^{61}$, ont la signification donnée dans la revendication 7; ou bien $L_8$ correspond à la formule

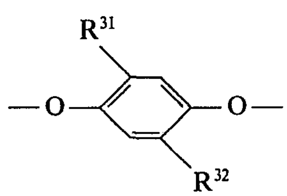

(44)

où $R^{31}$ et $R^{32}$, indépendamment l'un de l'autre, sont l'hydrogène ou un groupe alkyle à 1 à 12 atomes de carbone; et R', R'', x et y ont la signification donnée dans la revendication 8.

10. Matériau d'enregistrement photographique selon la revendication 3, caractérisé en ce que l'accélérateur de développement correspond à la formule

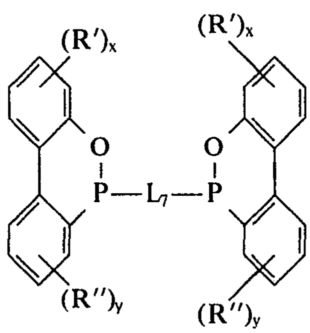

(46)

dans laquelle $L_7$ est un radical de formule $-NB_5-E_3-NB_6-$, où $B_5$ et $B_6$, indépendamment l'un de l'autre, sont l'hydrogène, le groupe méthyle, éthyle ou le radical A, et où $E_3$ est un groupe alkylène à 1 à 6 atomes de carbone, ou

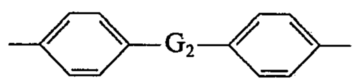

où $G_2$ est $-O-$, $-S-$ ou $=CK_3K_4$, où $K_3$ et $K_4$, indépendamment l'un de l'autre, sont l'hydrogène ou un groupe alkyle à 1 à 4 atomes de carbone; et R', R", x et y ont la signification donnée dans la revendication 3.

11. Matériau d'enregistrement photographique selon l'une des revendications 1 à 10, caractérisé en ce que l'accélérateur de développement correspond à la formule

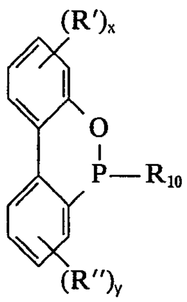

(48)

où $R_{10}$ correspond à la formule

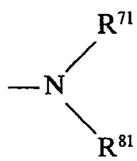

(49)

dans laquelle $R^{71}$ est l'hydrogène, un groupe alkyle à 1 à 12 atomes de carbone, cyclohexyle ou cyclooctyle, et $R^{81}$ est un groupe alkyle à 1 à 12 atomes de carbone, cyclohexyle, cyclooctyle, alcényle à 2 à 6 atomes de carbone, phényle éventuellement substitué par un groupe alkyle à 1 à 6 atomes de carbone, ce groupe phényle pouvant porter 1 ou 2 de ces substituants alkyle, ou pipéridinyle éventuellement substitué par un groupe alkyle à 1 à 4 atomes de carbone, ce groupe pipéridinyle pouvant porter 1 à 4 de ces substituants alkyle; ou bien dans laquelle $R^{81}$ et $R^{71}$ forment ensemble un radical de formules

$-(CH_2)_4-$ $-(CH_2)_5-$ $-CH_2CH_2-O-CH_2CH_2-$ ou

$-CH_2CH_2-NH-CH_2CH_2-$

ou bien où $R_{10}$ correspond à la formule

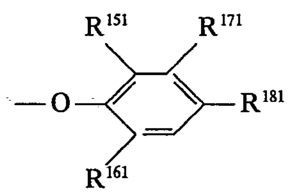

(50)

dans laquelle $R^{151}$ et $R^{161}$, indépendamment l'un de l'autre, sont l'hydrogène, un groupe alkyle à 1 à 8 atomes de carbone, benzyle ou phényléthyle, les radicaux phényle pouvant être substitués par un groupe alkyle à 1 à 4 atomes de carbone; $R^{171}$ est l'hydrogène, le groupe méthyle ou éthyle, et $R^{181}$ est l'hydrogène, un groupe alkyle à 1 à 8 atomes de carbone éventuellement substitué par un groupe alcoxycarbonyle à 2 à 24 atomes de carbone; alcoxy à 1 à 8 atomes de carbone ou alcoxycarbonyle à 2 à 19 atomes de carbone, ou bien $R^{181}$ forme, en association avec $R^{171}$, les atomes permettant de former, en association avec les atomes de carbone auxquels ils sont liés, un noyau pentagonal, saturé, éventuellement substitué par un groupe alkyle à 1 à 4 atomes de carbone, ce noyau pouvant être substitué par jusqu'à 4 de ces substiuants alkyle;

ou bien où $R_{10}$ correspond à la formule

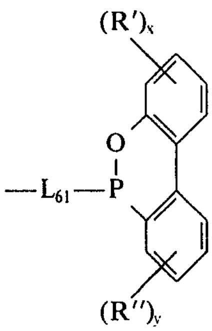

(51)

dans laquelle $L_{61}$ est un radical de formule $=N-Z_4$, où $Z_4$ est un groupe alkyle à 1 à 12 atomes de carbone ou cyclohexyle, un radical de formules

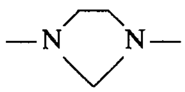

(33)

ou

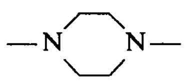

(34)

ou bien

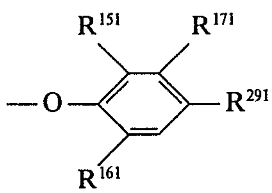

(52)

où $R^{291}$ est un radical de formules

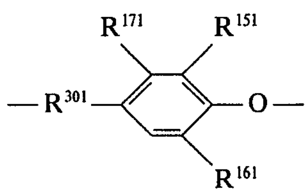

(53)

ou

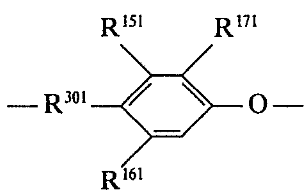

(54)

dans lesquelles $R^{301}$ est $=CR^{52}R^{62}$, où $R^{52}$ et $R^{62}$, indépendamment l'un de l'autre, sont l'hydrogène ou un groupe alkyle à 1 à 4 atomes de carbone; ou bien dans laquelle $L_{61}$ correspond à la formule

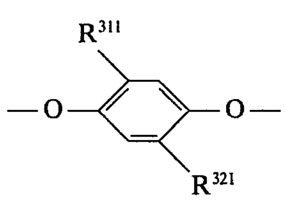

(55)

où $R^{311}$ et $R^{321}$, indépendamment l'un de l'autre, sont l'hydrogène ou un groupe alkyle à 1 à 8 atomes de carbone;
ou bein où $R_{10}$ correspond à la formule

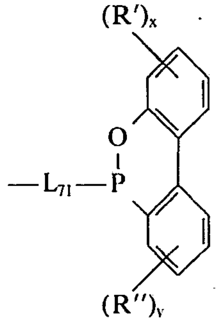

(56)

dans laquelle $L_{71}$ est un radical de formule $-NB_7-E_4-NB_8-$ où $B_7$ et $B_8$, indépendamment l'un de l'autre, sont l'hydrogène ou le radical A, et $E_4$ est un groupe alkylène à 1 à 6 atomes de carbone ou

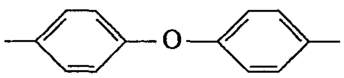

et où R', R'', x et y ont la signification donnée dans la revendication 1.

12. Matériau d'enregistrement photographique selon la revendication 11, caractérisé en ce que l'accélérateur de développement correspond à la formule

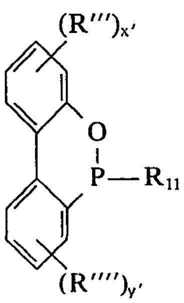

(57)

où $R_{11}$ correspond à la formule

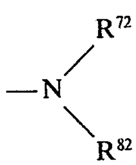

(58)

dans laquelle $R^{72}$ est l'hydrogène, un groupe alkyle à 1 à 8 atomes de carbone ou cyclohexyle, et $R^{82}$ est un groupe alkyle à 1 à 8 atomes de carbone, cyclohexyle, allyle, phényle éventuellement substitué par un groupe alkyle à 1 à 4 atomes de carbone, ce groupe phényle pouvant porter 1 ou 2 de ces substituants alkyle, ou pipéridinyl-4 éventuellement substitué par un groupe méthyle, ce groupe pipéridinyle-4 pouvant porter 1 à 4 groupes méthyle; ou dans laquelle $R^{82}$ et $R^{72}$ forment ensemble un radical de formules

$-(CH_2)_5-$ ou $-CH_2CH_2-NH-CH_2CH_2-$

ou bien où $R_{11}$ correspond à la formule

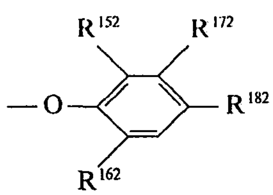

(59)

dans laquelle $R^{152}$ et $R^{162}$, indépendamment l'un de l'autre, sont l'hydrogène, un groupe alkyle à 1 à 8 atomes de carbone ou benzyle, le radical phényle pouvant être substitué par le groupe méthyle; $R^{172}$ est l'hydrogène ou le groupe méthyle, et $R^{182}$ est l'hydrogène, un groupe alkyle à 1 à 8 atomes de carbone, un groupe alkyle à 1 à 4 atomes de carbone substitué par un groupe alcoxycarbonyle à 2 à 19 atomes de carbone; méthoxy ou alcoxycarbonyle à 2 à 19 atomes de carbone, ou bien $R^{182}$ en association avec $R^{172}$, forme les atomes permettant de former, en association avec les atomes de carbone

auxquels ils sont liés un noyau pentagonal saturé, éventuellement substitué par 1 à 4 groupes méthyle; ou bien oú $R_{11}$ correspond à la formule

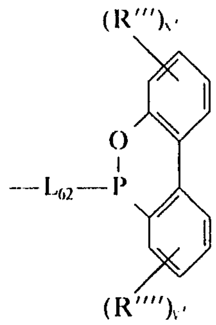

(60)

dans laquelle $L_{62}$ est un radical de formule $=N-Z_4$, où $Z_4$ a la signification donnée la revendication 11, ou correspond à la formule

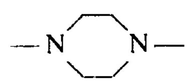

(34)

ou

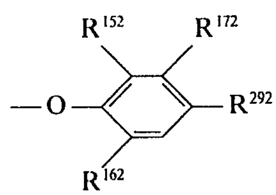

(61)

où $R^{292}$ est un radical de formules

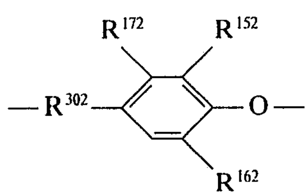

(62)

ou

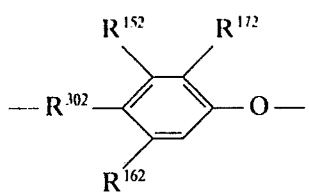

(63)

dans laquelle $R^{302}$ est $-CH_2-$, $-CHCH_3-$ ou $-C(CH_3)_2-$; ou bien dans laquelle $L_{62}$ correspond à la formule

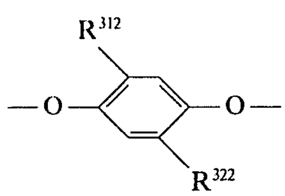

(64)

où $R^{312}$ et $R^{322}$, indépendamment l'un de l'autre, sont l'hydrogène ou un groupe alkyle à 1 à 4 atomes de carbone;
ou bien où $R_{11}$ correspond à la formule

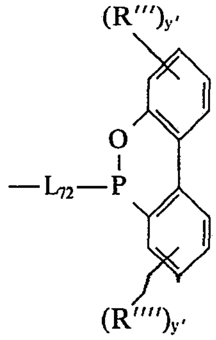

(65)

dans laquelle $L_{72}$ est un radical de formule $-NB_7-E_5-NB_8-$, où $B_7$ et $B_8$ ont la signification donnée la revendication 11, et $E_5$ est un groupe alkylène à 1 à 6 atomes de carbone, et où R''' et R'''', indépendamment l'un de l'autre, sont l'hydrogène, le groupe méthyle, éthyle, chlore ou brome, et x' et y' valent, indépendamment l'un de l'autre, 0 ou 1.

13. Utilisation du matériau photographique selon l'une des revendications 1 à 12 pour la préparation d'images photographiques.

14. Procédé de préparation de matériaux photographiques, caractérisé en ce qu'on incorpore un accélérateur de développement selon l'une des revendications 1 à 12 dans une couche du matériau photographique.

15. Bain de développement pour un matériau d'enregistrement photographique, caractérisé en ce qu'il contient, en une quantité de 1 à 50 g par litre, un accélérateur de développement selon l'une des revendications 1 à 12.